# EUROPEAN PATENT SPECIFICATION

(11) **EP 2 760 578 B1**
(45) Date of publication and mention of the grant of the patent: **26.08.2020**
(21) Application number: 12860342.0
(22) Date of filing: 27.09.2012
(51) Int. Cl.: B01J 19/26, B01J 8/06, B01J 19/24, B01F 13/00, B01L 3/02, B01F 3/08, B01L 3/00

(54) **SYSTEMS AND METHODS FOR DROPLET PRODUCTION AND/OR FLUIDIC MANIPULATION**
SYSTEME UND VERFAHREN ZUR HERSTELLUNG VON TRÖPFCHEN UND/ODER FLUIDISCHEN MANIPULATION
SYSTÈMES ET PROCÉDÉS DE PRODUCTION DE GOUTTELETTES ET/OU DE MANIPULATION DE FLUIDES

(30) Priority: 28.09.2011 US 201161540194 P
(43) Date of publication of application: 06.08.2014
(73) Proprietor: President and Fellows of Harvard College, Cambridge, MA 02138 (US)
(72) Inventor: SPERLING, Ralph, Alexander, Cambridge, MA 02138 (US); ABATE, Adam, R., San Francisco, CA 94114 (US); WEITZ, David, A., Bolton, MA 01740 (US)
(74) Representative: Hoffmann Eitle
(86) International application number: PCT/US2012/057404
(87) International publication number: WO 2013/095737

(56) References cited:
- WO-A1-2011/056546
- WO-A1-2011/056546
- WO-A2-2010/104597
- WO-A2-2011/028764
- US-A1- 2006 275 915
- US-A1- 2007 052 781
- US-A1- 2010 018 584
- US-A1- 2010 173 394
- US-A1- 2011 229 545
- US-B2- 7 708 949
- US-B2- 7 708 949

## Description

### FIELD OF INVENTION

The present invention generally relates to systems and techniques for manipulating fluids and/or making droplets.

### BACKGROUND

Microfluidics is an area of technology involving the control of fluid flow at a very small scale. Microfluidic devices typically include very small channels, within which fluid flows, which can be branched or otherwise arranged to allow fluids to be combined with each other, to divert fluids to different locations, to cause laminar flow between fluids, to dilute fluids, and the like. Significant effort has been directed toward "lab-on-a-chip" microfluidic technology, in which researchers seek to carry out known chemical or biological reactions on a very small scale on a "chip," or microfluidic device. Additionally, new techniques, not necessarily known on the macro scale, are being developed using microfluidics.

For instance, the manipulation of fluids to form fluid streams of desired configurations, discontinuous fluid streams, droplets, particles, dispersions, etc., for purposes of fluid delivery, product manufacture, analysis, and the like, is a relatively well-studied art. For example, highly monodisperse droplets, less than 100 micrometers in diameter, have been produced using a technique commonly referred to as flow focusing. In this technique, a fluid is forced out of a capillary tube into a bath of liquid, where the tube is positioned above a small orifice, and the contraction flow of the external liquid through this orifice focuses the gas into a thin jet which subsequently breaks into equal-sized droplets via capillary instability. A similar arrangement can be used to produce liquid droplets in air.

However, despite such progress, there still remains a need for improvement in techniques useful in the creation of droplets.

WO 2011/056546 A1 is concerned with systems and methods for producing droplets. The droplets may contain varying species, e.g., for use as a library. In some cases, at least one droplet is used to create a plurality of droplets, using techniques such as flow-focusing techniques. In one set of embodiments, a plurality of droplets, containing varying species, can be divided to form a collection of droplets containing the various species therein. A collection of droplets, according to certain embodiments, may contain various subpopulations of droplets that all contain the same species therein. Such a collection of droplets may be used as a library in some cases, or may be used for other purposes.

WO 2010/104597 describes parallel uses of microfluidic methods and devices for focusing and/or forming discontinuous sections of similar or dissimilar size in a fluid. It relates generally to flow-focusing-type technology, and also to microfluidics, and more particularly parallel use of microfluidic systems arranged to control a dispersed phase within a dispersant, and the size, and size distribution, of a dispersed phase in a multi-phase fluid system, and systems for delivery of fluid components to multiple such devices.

US 2006/275915 A1 describes introducing discrete samples into a mixing chamber containing a carrier fluid, so that the samples move from an inlet to an outlet of the mixing chamber. One or more reagents are also introduced into the mixing chamber, which move from the inlet to contact and mix with the corresponding samples at a location in the mixing chamber, to form respective processed samples for further processing or analysis. The location of contact is predetermined by predetermining the rate of movement of the samples and of each reagent. The method and apparatus permit rapid automated processing, are suitable for very small sample and reagent volumes (eg, 100 nanolitres), and minimize contamination.

US 2011/229545 A1 is concerned with colloidal systems, which may include colloidal particles and/or other types of particles. One aspect is generally directed to a system comprising fluidic droplets that can be at least partially solidified, e.g., to form colloidal particles. In some embodiments, particles comprising an at least partially solid outer phase encapsulating an inner phase are formed. The inner phase may be any phase, e.g., a solid, a liquid, or a gas. In some cases, solidifying at least a portion of the outer phase of the droplets to form particles may increase the stability of the particles and/or the colloidal system containing the particles. In one set of embodiments, melting or liquefying the outer phase of the particles (for example, by heating the particle to a temperature above a threshold temperature) can allow release of an agent contained within the inner phase, and/or allow the inner phase to coalesce with a phase external to the particles. The melting temperature of the outer phase can be controlled in some embodiments such that the outer phase will melt above a predetermined temperature. In some embodiments, the particles may be formed to be essentially free of an auxiliary stabilizing agent. In some embodiments, an agent may be encapsulated within a particle with relatively high efficiency. Other aspects are generally directed to methods of making and using such colloidal systems, e.g., containing such particles, kits involving such colloidal systems, or the like.

US 2010/173394 A1 is concerned with systems, including apparatus and methods, for performing assays. These systems may involve separating sample components by partitioning them into droplets or other partitions, amplifying or otherwise reacting the components within the droplets, detecting the amplified components, or characteristics thereof, and/or analyzing the resulting data, among others.

### SUMMARY

The present invention generally relates to systems and techniques for manipulating fluids and/or making droplets.

In one aspect, the present invention is the method as defined in claim 1. In another aspect, the invention is the article as defined in claim 6.

In some cases, the droplet-making units are positioned at a repeat spacing of about 9 mm, about 4.5 mm, or about 2.25 mm.

In some cases, at least one of the first or second microfluidic channels exhibits a first section and a second section that is substantially antiparallel to the first section.

The article, may include a pressurizing fluid in fluidic communication with substantially all of the different sources of droplet fluid, and a pressure source able to alter the pressure of the pressurizing fluid.

Other advantages and novel features of the present invention will become apparent from the following detailed description of various non-limiting embodiments of the invention when considered in conjunction with the accompanying figures.

### BRIEF DESCRIPTION OF THE DRAWINGS

Non-limiting embodiments of the present invention will be described by way of example with reference to the accompanying figures, which are schematic and are not intended to be drawn to scale. In the figures, each identical or nearly identical component illustrated is typically represented by a single numeral. For purposes of clarity, not every component is labeled in every figure, nor is every component of each embodiment of the invention shown where illustration is not necessary to allow those of ordinary skill in the art to understand the invention. In the figures:
Figs. 1A-1B illustrate devices for making droplets in accordance with certain embodiments of the invention;
Fig. 2 illustrates a fluidic unit in another embodiment of the invention;
Figs. 3A-3B illustrate microfluidic devices comprising a plurality of droplet-making units, in yet other embodiments of the invention; and
Figs. 4A-4B illustrate additional droplet-making units, in accordance with another embodiment of the invention.

### 1.1 DETAILED DESCRIPTION

The present invention generally relates to systems and techniques for manipulating fluids and/or making droplets. In certain aspects, the present invention generally relates to droplet production. The droplets are formed from fluids from different sources. In one set of embodiments, the present invention is directed to a microfluidic device comprising a plurality of droplet-making units, and/or other fluidic units, which may be substantially identical in some cases. Each of the fluidic units are in fluidic communication with a different source of a first fluid and a common source of a second fluid. In one aspect, the same pressure is applied to all of the different sources of fluid, which causes fluid to move from the different sources into the microfluidic device. In some cases, the fluids may interact within the fluidic units, e.g., by reacting, or for the production of droplets within the microfluidic device. In some cases, the droplets may be used, for example, to form a library of droplets.

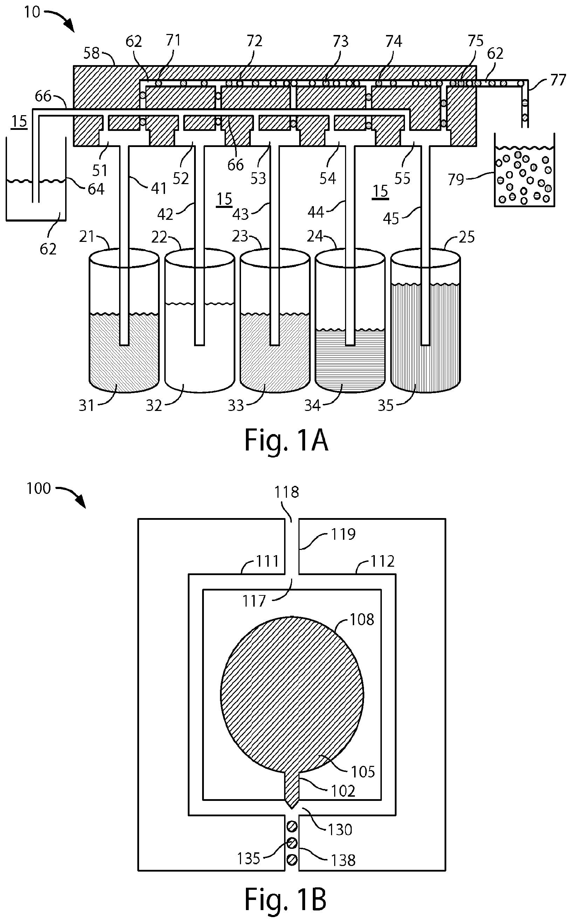

One non-limiting example of an aspect of the invention is now described with respect to Fig. 1. In this figure, microfluidic system 10 comprises a plurality of sources of droplet fluid 21, 22, 23, 24, and 25, each containing droplet fluid 31, 32, 33, 34, and 35. Although only five sources of droplet fluid are shown here, this is by way of explanation only, and in other embodiments of the invention, other numbers of sources of droplet fluid may be present. As non-limiting examples, there may be 6, 24, 96, 384, or 1,536 sources of droplet fluid present.

The droplet fluid in each of the sources of droplet fluid may independently be the same or different. For instance, there may be one or more than one type of droplet fluid present in each source of droplet fluid 21, 22, 23, 24, and 25. In some cases, the droplet fluid can be substantially identical except that some or all of the sources of droplet fluid may contain different species. As non-limiting examples, the sources of droplet fluid 21, 22, 23, 24, and 25, etc. may contain the same droplet fluid, except containing different species, and/or the same species at various concentrations. In Fig. 1, the droplet fluid in each source of droplet fluid is shaded differently to aid in identification.

Inserted in each source of droplet fluid 21, 22, 23, 24, and 25 are tubes 41, 42, 43, 44, and 45. These tubes may have the same or different sizes or diameters. Droplet fluid from sources 21, 22, 23, 24, and 25 flows through tubes 41, 42, 43, 44, and 45 into a plurality of droplet-making units 51, 52, 53, 54, and 55 contained within microfluidic device 58. The fluid may be brought into microfluidic device 58 using any suitable technique. For example, a pump such as a syringe pump may be used to pump fluid into microfluidic device 58, or the fluid can be drawn there via capillary action. In one set of embodiments, an external pressure may be used; as shown in Fig. 1, the plurality of sources of droplet fluid 21, 22, 23, 24, and 25 are open to the surrounding environment 15, and in some embodiments, the pressure of the surrounding environment may be increased (e.g., relative to the pressure within microfluidic device 58, such that droplet fluid is driven by the differences in pressure into microfluidic device 58). For example, microfluidic device 58 may be contained within a pressure chamber, and the pressure within the pressure chamber may be controlled to control the delivery of fluid from sources of droplet fluid 21, 22, 23, 24, and 25 into microfluidic device 58.

Microfluidic device 58 also contains channel 66, which is in fluidic communication to a source 64 of carrier fluid 62. Carrier fluid 62 flows through channel 66 within microfluidic device 58 to droplet-making units 51, 52, 53, 54, and 55, etc. Although only one channel 66 is shown in this example, this is by way of example only, and in other embodiments, there may be more than one such channel in fluid communication with source 64 of carrier fluid 62. Carrier fluid 62 from source 64 may be moved into microfluidic device 58 using techniques similar to those described above; for example, one or more pumps can be used to deliver the carrier fluid, or the fluid may flow via capillary action. In another example, as shown in Fig. 1, a difference in pressure between the surrounding environment 16 and the pressure within microfluidic device 58 may be used to move carrier fluid 62 towards droplet-making units 51, 52, 53, 54, and 55, etc. Surrounding environment 16 may or may not be the same as environment 15 surrounding the plurality of sources of droplet fluid 21, 22, 23, 24, and 25, etc. For example, the pressure surrounding environment 16 may be at the same pressure (or a different pressure) than environment 15. In addition, in some embodiments, the technique used to move carrier fluid 62 into microfluidic device 58 may be the same or different than the technique used to move droplet fluid 31, 32, 33, 34, and 35, etc. into the microfluidic device. As a non-limiting example, pressure may be used to move droplet fluid 31, 32, 33, 34, and 35 into microfluidic device 58, while a pump such as a syringe pump may be used to move carrier fluid 62 into microfluidic device 58.

Within droplet-making units 51, 52, 53, 54, and 55, a plurality of droplets 71, 72, 73, 74, and 75, may be produced such that droplet fluid 31, 32, 33, 34, and 35, forms discrete droplets surrounded by a common carrier fluid 62. As shown in Fig. 1, the droplets are collected in collector channel 77 within microfluidic device 58. In this figure, the droplets are combined within collector channel 77 to form a plurality of droplets contained within a common carrier fluid, where the plurality of droplets may be the same or different. In some cases, the droplets may also be mixed together randomly. The plurality of droplets is then collected from the collector channel 77, for various uses, e.g., as shown by collection of droplets 79 at the outlet of collector channel 77.

As mentioned above, in various embodiments, a plurality of droplet-making units 51, 52, 53, 54, and 55 is used to combine a droplet fluid and a carrier fluid together to form a droplet of droplet fluid surrounded or contained by the carrier fluid. A non-limiting example of such a process of producing such droplets with a droplet-making unit is now illustrated with respect to Fig. 1B. Other examples are described in more detail below.

In Fig. 1B, droplet fluid 105 (e.g., arising from a tube in fluidic communication with a source of droplet fluid, as previously discussed) enters droplet-making unit 100 at inlet 108 (e.g., from out of the plane of the paper). As shown here, inlet 108 is substantially circular, although other shapes are also possible. Droplet fluid 105 then leaves inlet 108 through channel 102. Carrier fluid 115 (e.g., arising from a channel in fluidic communication with a source of carrier fluid) also enters droplet-making unit 100. In this example, carrier fluid 115 enters from the top of droplet-making unit 100 through inlet 118 into channel 119. At intersection 117, channel 119 divides into two channels 111, 112, which each flow in different directions around inlet 105, eventually meeting at intersection 130 with channel 102 from inlet 108. At intersection 130, the flow of carrier fluid and droplet fluid causes droplets 135 of droplet fluid to form, surrounded by the carrier fluid. Droplets 135 may then exit through outlet channel 138 and outlet 139.

A common source of fluid is used to supply fluid to substantially all of the fluidic units; for instance, a common source of carrier fluid can be used to supply carrier fluid to all of the droplet-making units within a microfluidic device. A source of fluid can be located within the microfluidic device, or positioned externally of the microfluidic device. For example, a common source of fluid may include one or more containers, such as vials, ampules, beakers, bottles, flasks, microwell plates, pipettes, etc.

Droplets can be created using a plurality of sources of droplet fluid, for example, in cases where the creation of a library of droplets is desired. The sources of fluid that are present may independently be the same or different. For example, in one embodiment, the fluid within the various sources of fluid may each be substantially identical; in another embodiment, each of the fluids within the sources of fluid may be different or distinguishable. In certain embodiments, however, some but not all of the sources of fluid are substantially identical, for example, if duplicates, triplicates, etc. of a certain type of fluid are needed. In some embodiments, some or all of the sources of fluid may be substantially identical except for the presence of one or more species contained within some or all of the fluids. For example, different sources of fluid may contain different species, and/or the same species at different concentrations (and/or any combination thereof). For instance, in some embodiments, substantially each of the different sources of fluid contains the same solvent; for example, the different sources of fluid may contain the same solvent but different species, and/or the same species at various concentrations (and/or any combination thereof).

There can be any number of sources of fluid present. For instance, there may be 2 or more, 3 or more, 4 or more, 5 or more, 6 or more, 10 or more, 15 or more, 20 or more, 24 or more, 30 or more, 35 or more, 40 or more, 45 or more, 50 or more, etc. of sources of fluid present. In one embodiment, there are 2n x 3n or more sources of fluid present, where n is a positive integer, e.g., n may be 1, 2, 3, 4, 5, 6, 7, 8, 9, 10, 11, 12, 13, 14, 15, 16, etc.

The sources of fluid may be present in any suitable form. For example, the sources of fluid may include one or more containers, such as vials, ampules, beakers, bottles, flasks, microwell plates, pipettes, etc., or any combination of these and/or other suitable contains. The containers may independently be the same or different. In one set of embodiments, for example, fluid may be contained within one or more microwells of a microwell plate, e.g., an ANSI microwell plate. Many such ANSI microwell plates are known to those of ordinary skill in the art, and typically, an ANSI microwell plate will contain 2n x 3n wells, where n is a positive integer. Thus, for example, there may be 6, 24, 96, 384, 1,536, etc. sources of droplet fluid present, e.g., in an ANSI microwell plate format. However, it should be understood that not all wells of an ANSI microwell plate must be used, and some of the microwells on the microwell plate may be left empty or unused as a source of fluid to the device. Thus, for example, about 1/2, about 1/3, about 1/4, about 2/3, or any other suitable fraction of microwells on a microwell plate can be used.

The sources of fluid are in fluidic communication with a fluidic unit, e.g., droplet-making units. For example, one or more tubes, channels, or the like can be positioned between a source of fluid and a fluidic unit . The fluidic units may be used in accordance with some embodiments to mix or react a first fluid (e.g., from a first source of fluid) and a second fluid (e.g., from a second source of fluid). For example, as discussed in more detail below, a fluidic unit may act as a droplet-making unit that can be used to combine a first fluid from a source of first fluid (or droplet fluid) with a second fluid from a source of second fluid (or carrier fluid) to produce a droplet of droplet fluid contained within the carrier fluid.

There may be any number of such fluidic units present, e.g., in a microfluidic device. In some cases, there may be the same number of fluidic units present in the microfluidic device as there are on an ANSI microwell plate, e.g., one that the microfluidic device would be connected to (for example, an ANSI microwell plate used as a source of fluid). Thus, in one set of embodiments, there may be 2n x 3n fluidic units present in the device, where n is a positive integer, e.g., there may be 6, 24, 96, 384, 1,536, etc. fluidic units present. In other embodiments, however, only a portion of an ANSI microwell plate may be used. Thus, for example, the number of fluidic units in a device can be about 1/2, about 1/3, about 1/4, about 2/3, or any other suitable fraction of the number of microwells on a microwell plate. In still other embodiments, there may be any number of fluidic units present in the microfluidic device. For example, there may be 1, 2, 3, 4, 5, 6, 8, 10, 12, 15, 20, 25, 30, 35, 40, 50, 60, 75, 100, 200, 300, etc. fluidic units present in a microfluidic device.

In some cases, the fluidic units may be identical or at least substantially identical, e.g., disregarding orientation, rotations, reflections, translations, etc. The fluidic units can be positioned at any suitable repeat spacing, e.g., in embodiments where the fluidic units were identical or at least substantially identical. As a non-limiting example, in certain embodiments where an ANSI microwell plate used as a source of fluid, the fluidic units can be positioned at a repeat spacing of about 9 mm, about 4.5 mm, about 2.25 mm, or any other repeat spacing that is typically present in an ANSI microwell plate.

A fluidic unit, such as a droplet-making unit, comprises a plurality of microfluidic channels, intersecting at an intersection. In some cases, some or all of the plurality of channels within a fluidic unit are substantially planar, e.g., such that there are no "bridges" or noncontacting crossings of one channel over another channel within the fluidic unit, and in some cases, the entire fluidic unit may be substantially planar.

As an example, in one set of embodiments, the fluidic unit may comprise a first channel holding a first fluid (e.g., a droplet fluid) and a second channel holding a second fluid (e.g., a carrier fluid) that intersect at an intersection. The intersection may also comprise an outlet channel that exits the intersection. Accordingly, as discussed herein, fluid within the first channel may interact with fluid within the second channel before exiting the intersection through the outlet channel. For example, the fluids may mix, react, from droplets, or the like

Other configurations are also possible in other embodiments of the invention. For instance, there may be more than one channel that carries one or more fluids to an intersection (e.g., a carrier fluid and/or a droplet fluid), and/or there may be more than one outlet channel from the intersection. The channels may be in fluid communication with one, or more than one, source of fluid, e.g., a source of a first fluid (e.g., a droplet fluid) and/or source of a second fluid (e.g., a carrier fluid). As a non-limiting example, as shown in Fig. 1B, at intersection 130, channel 102 containing droplet fluid 105 intersects with channels 111 and 112, each of which contains carrier fluid 115. Droplet fluid 105 may arise from a source of droplet fluid that enters droplet-making unit 100 through inlet 108. In this figure, carrier fluid 115 in each of channels 111 and 112 is substantially identical, as each of these channels is in fluidic communication with channel 119, containing carrier fluid 115 (e.g., arising from a common source of carrier fluid) that enters droplet-making unit 100 through inlet 118. However, in other embodiments, there can be more than one fluid present, e.g., carried by different channels and/or arising from different inlets. In this figure, as fluids from channels 111 and 112 enter intersection 130, they cause fluid from channel 102 to break up into individual, discrete droplets 135, which exit intersection 130 through outlet channel 138 to outlet 139.

As discussed, a fluid unit] includes an intersection where a first, droplet fluid interacts with a second, carrier fluid to form one or more droplets. The intersection of the droplet-making unit where the carrier fluid and the droplet fluid interact to form droplets can have any suitable configuration that allows droplets to be formed, and the droplets may be formed via any suitable mechanism. For example, the droplets may be formed by the creation of electric charges or dipole moments within the droplet fluid and/or the carrying fluid, the droplets may be created by altering the channel dimensions in a manner that is able to induce the fluid to form individual droplets, or the like. Other examples of suitable techniques include flow-focusing (e.g., under dripping and/or jetting conditions), mechanical techniques, and/or electrical techniques known to those of ordinary skill in the art. Further non-limiting examples of techniques useful for forming droplets at an intersection unit are disclosed in U.S. Patent Application Serial No. 11/246,911, filed October 7, 2005, entitled "Formation and Control of Fluidic Species," by Link, *et al.,* published as U.S. Patent Application Publication No. 2006/0163385 on July 27, 2006; U.S. Patent No. 7,708,949, issued May 4, 2010, entitled "and Apparatus for Fluid Dispersion," by Stone, *et al.;* or U.S. Patent Application Serial No. 11/360,845, filed February 23, 2006, entitled

"Electronic Control of Fluidic Species," by Link, et al, published as U.S. Patent Application Publication No. 2007/0003442 on January 4, 2007. In various embodiments, a plurality of droplets may be produced within a droplet-producing unit, e.g., as shown in Fig. 1B. In certain embodiments, the droplets thus formed may be monodisperse, e.g., as discussed herein.

As a non-limiting example, in accordance with one set of embodiments, a flow of droplet fluid may be compressed or "squeezed" by the introduction of one or more carrier fluids, e.g., using flow-focusing techniques. The carrier fluids can be at least substantially immiscible with the droplet fluid, which may cause the flow of droplet fluid to condense or "break up" to form individual or discrete droplets. In some, but not all embodiments, a dimensional restriction may be used to facilitate droplet formation, such as is disclosed in U.S. Patent No. 7,708,949, issued May 4, 2010, entitled "and Apparatus for Fluid Dispersion," by Stone, et al. The dimensional restriction may have any suitable shape, e.g., an annular orifice. The dimensional restriction is non-valved in some embodiments; for example, the dimensional restriction may be an orifice that cannot be switched between an open state and a closed state, and is typically of fixed size. In other embodiments, however, no dimensional restriction is needed or necessary, e.g., as in the embodiment shown in Fig. 1B.

Channels meeting at an intersection within a fluidic unit may meet any suitable angle. As shown in Fig. 1B, in some embodiments, the angles are right angles, although in other embodiments, other angles may be present. In one set of embodiments, a channel containing a first fluid intersects at an intersection with a channel containing a second fluid. The angle of intersection may be at about 90° or any other suitable angle. In some embodiments, the channels may meet at the intersection at about 180° from each other, or any other suitable angle relative to each other, for example, if more than one channel containing a second fluid (such as a carrier fluid) is present. The outlet channel of an intersection may be at an angle of about 90°, about 180°, or any other suitable angle with respect to any of the inlet channels entering the intersection. In some cases, the channels may meet at a T-junction, a Y-junction, an X-junction, or the like.

As mentioned, the channels intersecting at the intersection may be in fluidic communication with one or more inlets of the fluidic unit, which may, in turn, be in fluidic communication with one or more sources of fluid. In some embodiments of the invention, relatively long channels are used, e.g., between the inlet and an intersection where the fluids interact or droplets are created. Without wishing to be bound by any theory, longer channels may be useful in certain embodiments of the invention for example, to control the flow resistance between different fluidic units, e.g., such that the largest contribution of flow resistance between the different fluidic units is controlled by the length of the channels therein, and thus, by controlling the length of the channels, variability in flow resistance between different fluidic units may be reduced. In some cases, longer channels can be useful to reduce the ability of transient events (e.g., caused by the entry of fluid through inlets into the fluidic unit) to affect droplet production within the fluidic units.

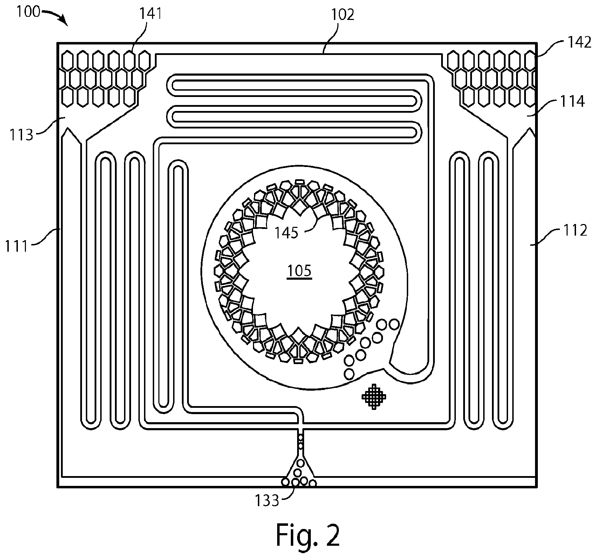

According to the invention, at least one channel within the fluidic unit (e.g., a droplet-making unit) has a length that is greater than about two times the largest dimension of the fluidic unit, i.e., the longest straight line that can be completely contained within that fluidic unit. In certain instances, even longer channels may be present within the fluidic unit, e.g., greater than about 2.5, greater than about 3, greater than about 4, greater than about 5, greater than about 6, greater than about 8, or greater than about 10 times the largest dimension of the fluidic unit. Such channels may be present, in certain embodiments, by "winding" or "folding" the channel within the fluidic unit. For instance, a channel may have a serpentine flow pathway where the channel exhibits a first section and a second section that is substantially antiparallel (i.e., with respect to fluid flow) to the first section. In Fig. 2, for example, each of channels 102, 111, and 112 are folded in a serpentine flow pathway. For instance, channel 110 includes a first section exhibiting a downward portion (i.e., with respect to the page); a second, substantially antiparallel upward portion; a third, downward portion, etc. However, other directions of winding are also possible. As a specific example, channel 102 in this figure includes sections exhibiting leftward portions, rightward portions, upward portions, and downward portions (i.e., with respect to the page). In addition, it should be noted that a channel need not exhibit a serpentine flow pathway. For example, the channel may include a spiral portion, a randomly-directed portion, or any other suitable configuration. Also, other channels within the droplet-making unit need not have a length within the fluidic unit that is at least greater than two times the largest dimension of the fluidic unit.

The fluidic units may comprise one, two, three, or more inlets and/or outlets. For example, a fluidic unit may comprise a first inlet for introducing a first fluid into the fluidic unit and a second inlet for introducing a second fluid into the fluidic unit. In some cases, more than one inlet can be present in a fluidic unit. For example, as shown in Fig. 2, a fluidic unit 100, such as a droplet-making unit, may have two inlets for introducing a carrier fluid, e.g., inlets 113 and 114 fluidically are in fluidic communication with channels 111 and 112, respectively. As another example, there may be more than one inlet for introducing a droplet fluid into the fluidic unit. There may also be one or more than one outlet. In the example of Fig. 2, there is only one outlet 133 from the fluidic unit.

In one set of embodiments, an inlet of a fluidic unit may be substantially centrally positioned within the fluidic unit. For instance, the inlet can comprise the geometrical centroid of the fluidic unit. In certain embodiments, the substantially centrally positioned inlet is in fluid communication with a source of fluid, e.g., as is shown in Fig. 1B with inlet 105. The inlet is substantially circular in some embodiments. In some cases, the inlet may be in fluidic communication with a tube that is in fluidic communication with a source of fluid. For example, the source of fluid may be positioned externally of the microfluidic device, and the tube may be used to deliver fluid from the source of fluid to the inlet of the fluidic unit. For instance, the source of fluid may be a source of droplet fluid in an embodiment where droplets are produced in a fluidic unit.

In some embodiments, the tube may fluidically connect a source of fluid to an inlet of a fluidic unit. The tube may not necessarily be an integral part of the microfluidic device, and instead may extend outwardly from the droplet-making unit or the microfluidic device. The tube itself is not necessarily microfluidic, although it can be in some instances. In one set of embodiments, for example, the tube may be relatively large. The tube can be formed out of any suitable material, for example, polymers such as polyethylene (PE), polypropylene (PP), polyether ether ketone (PEEK), fluorinated ethylene propylene (FEP), etc.; glass, or steel (e.g., a hypodermic tube). In embodiments with more than one fluidic unit, there may be a plurality of such tubes. In some embodiments, substantially each of the tubes fluidically connects one of the different sources of fluid to the one of the fluidic units. In some cases, at least some tubes of the plurality of tubes are substantially parallel to each other. For example, the tubes may be arranged in an array, each extending outwardly from the plurality of fluidic units, such that the tubes can be inserted or otherwise interfaced with different sources of fluid. In such a way, different fluids may be introduced to the plurality of fluidic units through the array of tubes. In other embodiments, however, more than one tube may be used to fluidically connect to a given source of fluid. Thus, for example, one source of fluid may be in fluidic communication with two, three, four, etc. tubes that in turn are in fluidic communication with two, three, four, etc. fluidic units.

In some embodiments, a microfluidic device can comprise one or more filters. The filters can be used in some cases to at least partially aid in removing at least a portion of any unwanted particulates from a fluid entering the device. In some cases, the filters are formed integrally within the microfluidic device, or within the fluidic unit in some embodiments. For example, the filters may be positioned at an inlet of the microfluidic device, and/or at an inlet of a fluidic unit. In some cases, there may be more than one filter present within the microfluidic device. For instance, substantially each of the fluidic units can contain one or more filters.

Non-limiting examples of such filters may be seen in Fig. 2 with filters 141, 142, and 145 proximate to inlets 113, 114, and 105, respectively. The filters can be used to remove particulate matter (e.g., dust, particles, dirt, debris, cell remnants, protein aggregates, liposomes, colloidal particles, insoluble materials, other unidentified particulates, etc.), which may otherwise cause clogging or blockage of a channel. The particulates may be present in a fluid passing through a filter. For instance, particulates may become lodged within the filter and be prevented from passing therethrough. It should be noted that even if some particulates are present and block some passages within the filter, the filter may still be effective at passing fluid therethrough and filtering additional particulates as long as some passages exist through the filter for fluid to flow.

A microfluidic filter can comprise a plurality of posts in some embodiments. The posts may be arranged in any suitable configuration. For example, the posts may be positioned at or near an inlet. The posts may be of any suitable size, shape, and/or number, and be positioned in any suitable arrangement within the filter. If more than one post is present, the posts may independently be of the same, or different, shape and/or size. The size of the gaps between the posts can be selected such that the size of each gap is about 1%, about 2%, about 3%, about 5%, about 10%, about 15%, about 20%, about 30%, about 40%, about 50%, about 60%, about 70%, about 80%, or about 90% of the size of the filter, or the size of a cross-section distance of a channel in which the fluid may flow through following exiting the filter.

Non-limiting examples of shapes for posts include, but are not limited to, rectangle, square, circle, oval, trapezoid, teardrop, triangle, etc. In some embodiments, the length of a post may be substantially greater than the width of the post, or the width of a post may be substantially greater than the length of the post. The filter can comprise about 5, about 6, about 7, about 8, about 9, about 10, about 11, about 12, about 15, about 20, or more, posts. The posts may be arranged in a linear arrangement and/or in other arrangements, including multiple lines of posts (rectangularly arrayed, staggered, etc.) or randomly arrangements of posts. In some cases, the posts may be associated with any suitable surface of the channel (e.g., bottom, top, and/or walls of the channel). In some cases, the posts may be arranged in a three-dimensional arrangement. In some cases, the height of the microfluidic channel may vary and/or the height of the posts may vary.

The fluidic units (e.g., droplet-making units) can be contained within a microfluidic device, which may contain one or more layers, some or all of which may define the fluidic units, in accordance with certain aspects of the invention. For instance, the microfluidic device may have channels positioned at different heights, having multiple heights, etc. If more than one layer is used, the layers may be assembled or bonded together, e.g., using plasma bonding or other suitable techniques, to produce the microfluidic device. In some embodiments, one or more of the layers may have one or more mating protrusions and/or indentations which are aligned to properly align the layers, e.g., in a lock-and-key fashion. For example, a first layer may have a protrusion (having any suitable shape) and a second layer may have a corresponding indentation which can receive the protrusion, thereby causing the two layers to become properly aligned with respect to each other.

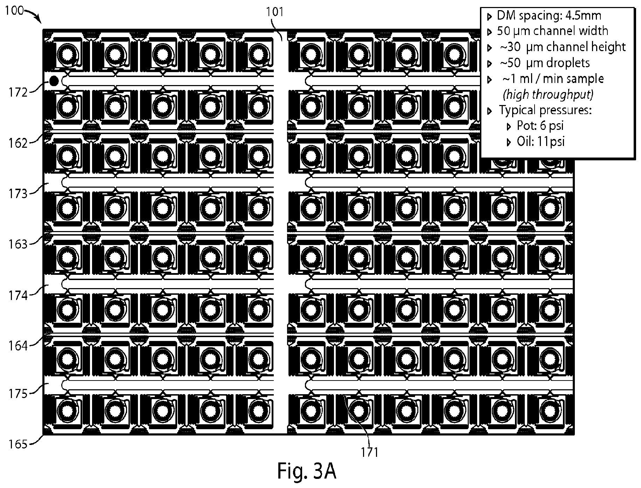

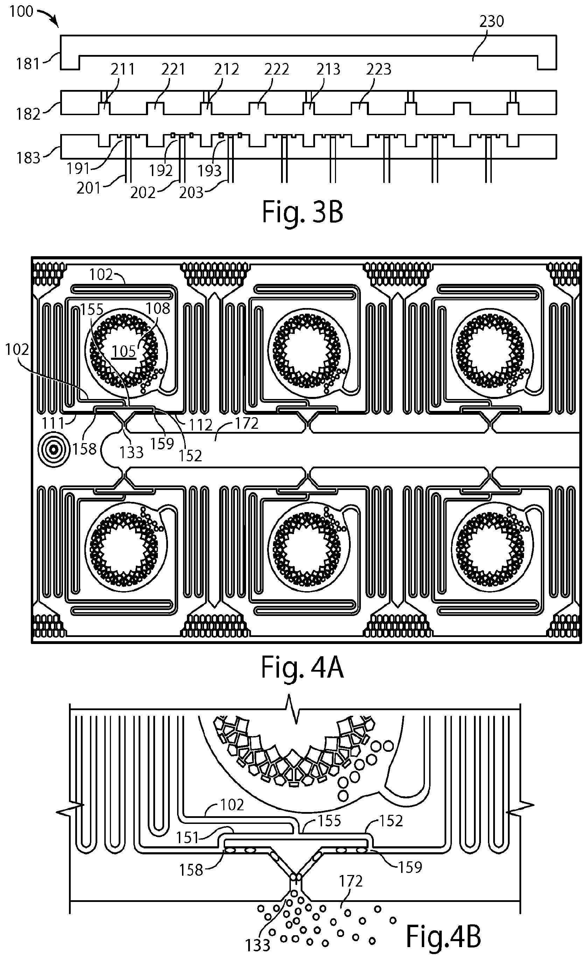

As a non-limiting example of a microfluidic device formed from multiple layers, as is shown in Fig. 3, a device comprising 96 substantially identical droplet-making units is illustrated. It should be noted that droplet-making units are shown in Fig. 3 by way of example only, and in other embodiments, other fluidic units may be used, e.g., instead of and/or in addition to droplet-making units. In this example, half of the substantially identical droplet-making units have the configuration of the droplet-making unit shown in Fig. 2, while the other half have a configuration that is essentially a mirror image of this droplet-making unit. This configuration allows two adjacent droplet-making units, having mirror image configurations relative to each other, to share incoming carrier fluid. It should be noted, however, that the invention is not limited to only devices having droplet-making units with mirror image configurations, as this figure is by way of example only. For example, in various embodiments, all of the droplet-making units may be identical, or there may be any number or type of rotations, reflections, translations, etc. present. In some cases, there may also be droplet-making units having substantially different configurations, e.g., as discussed herein.

In some embodiments, there can be one or more channels within a microfluidic device, some or all of which may be substantially parallel in certain cases, for distributing a fluid (e.g., from a common source of fluid) to substantially each of the droplet-making units, and/or for collecting droplets or other product (e.g., mixtures, reaction products, etc.) arising from substantially each of the fluidic units. In some cases, the channels may include microfluidic channels.

As a non-limiting example, in Fig. 3A, a carrier fluid can enter microfluidic device 100 through channel 161 to be distributed by substantially parallel channels 162, 163, 164, and 165. As noted above, Fig. 3 illustrates droplet-making units by way of example only. From each of these channels, the carrier fluid may pass into one of a number of droplet-making units positioned on either side of each of these channels. In addition, shown in Fig. 3 are substantially parallel channels 172, 173, 174, and 175 for collecting droplets produced by the droplet-making units. Droplets collected in these channels flows to a common channel 171, which then exits microfluidic device 100, e.g., thereby producing a library of droplets, or for other uses such as those described herein.

A schematic side view of this device is shown in Fig. 3B. As shown here, microfluidic device 100 includes three layers 181, 182, and 183. The device includes a number of droplet-making units 191, 192, 193, etc. defined between layers 182 and 183, each of which is connected to tubes 201, 202, 203, etc. exiting device 100. Defined between the droplet-making units are channels 211, 212, 213, etc. which can carry carrier fluid to the droplet-making units, and channels 221, 222, 223, etc. which can carry droplets produced by the droplet-making units. Channel 230 defined between layers 181 and 182 may be used to move carrier fluid to each of channels 211, 212, 213, etc. (as shown), or carry droplets away from the droplet-making units (not shown).

Another configuration is shown in Fig. 4. In Fig. 4A, fluid 105 entering inlet 108 flows through channel 102 to T-junction 155, which splits into channels 151 and 152. Each of channels 151 and 152 then intersect with channels 111 and 112, respectively, at junctions 158 and 159. Channels 111 and 112 carry a carrier fluid, which may arise from one or more than one source. Fig. 4B is an expanded view of Fig. 4A. As shown in Fig. 4B, two sets of droplets are created at the junctions of channels 111 and 151, and channels 112 and 152. The droplets may exit via one or more outlets 133 into a collection channel 172. Such a configuration may be useful, for example, to provide redundancy in regard to channel blockage, or to increase the droplet production rate. In addition, it should be noted that in other embodiments of the invention, other configurations may be used, e.g., having additional junctions for creating droplets within a droplet-making unit.

Certain aspects of the invention involve the use of one or more fluids. As mentioned, the term "fluid" generally refers to a substance that tends to flow and to conform to the outline of its container, i.e., a liquid, a gas, a viscoelastic fluid, etc. Typically, fluids are materials that are unable to withstand a static shear stress, and when a shear stress is applied, the fluid experiences a continuing and permanent distortion. The fluid may have any suitable viscosity that permits flow. If two or more fluids are present, each fluid may be independently selected among essentially any fluids (liquids, gases, and the like) by those of ordinary skill in the art, by considering the relationship between the fluids.

In some cases, two or more fluids may be used. As noted, the fluids may be may exhibit any degree of miscibility, e.g., ranging from miscible to immiscible. In some cases, the two fluids may be at least substantially immiscible. For example, as previously discussed, in one set of embodiments, the carrier fluid may be an oil (or the carrier fluid may be substantially immiscible in water), while the droplet fluid may be hydrophilic (or the droplet fluid may be substantially miscible in water). In other embodiments, however, the carrier fluid may be hydrophilic while the droplet fluids may be hydrophobic, or substantially immiscible in water. As used herein, two fluids are immiscible, or not miscible, with each other when one is not soluble in the other to a level of at least 10% by weight at the temperature and under the conditions at which the droplets are produced. In one embodiment, two fluids may be selected to be immiscible within the time frame of the formation of the droplets.

It should be noted that the term "oil" as used herein merely refers to a fluid that is generally more hydrophobic than water and is substantially immiscible in water, as is known in the art. Thus, the oil may comprise a hydrocarbon in some embodiments, but in other embodiments, the oil may comprise other hydrophobic fluids. Non-limiting examples of hydrophobic liquids include, but are not limited to, a silicone oil, a mineral oil, a fluorocarbon oil (e.g., octadecafluorodecahydronaphthalene or 1-(1,2,2,3,3,4,4,5,5,6,6-undecafluorocyclohexyl)ethanol), a hydrocarbon oil (e.g., hexadecane), an organic solvent, or the like.

A hydrophilic liquid is a liquid that is typically substantially water soluble, at least under certain conditions, e.g., ambient conditions (1 atm at 25 °C). Examples of hydrophilic liquids include, but are not limited to, water and other aqueous solutions comprising water, such as cell or biological media, saline solutions, etc., as well as other hydrophilic liquids such as ethanol, dimethylsulfoxide (DMSO), etc. Additional non-limiting examples include a salt solution, a buffer solution, a suspension of water containing particles, or the like.

A fluid (e.g., carrier fluid or droplet fluid) may be delivered from a source of fluid to the microfluidic device using any suitable mechanism. For example, a pump, gravity, capillary action, surface tension, electroosmosis, centrifugal forces, vacuum or pressures below atmospheric pressure, etc. may be used to deliver a fluid from a fluid source into one or more channels in the device. Non-limiting examples of pumps include syringe pumps, peristaltic pumps, pressurized fluid sources, or the like. In some aspects, fluid from the different sources of fluid may be delivered to the fluidic units by applying substantially the same pressure and/or pressure drop (e.g., measured from the source of pressure to an outlet or a collector channel exiting the device) to substantially all of the different sources of fluid to cause the fluids to move from the different sources of fluid into the microfluidic device. For example, with respect to droplet-making units, fluid from different sources of droplet fluid may be delivered to the droplet-making units by applying substantially the same pressure and/or pressure drop to substantially all of the different sources of droplet fluid.

The pressure may be applied directly to substantially all of the different sources of fluid, for example, using a syringe, a piston, or other mechanical device, and/or by applying a pressurizing fluid to substantially all of the different sources of fluid. The pressure that is applied may be a constant pressure, a constant pressure drop (e.g., from a pressure source to an outlet of the device), and/or a pressure that is controlled such that the flow rate of fluid into the deice remains substantially constant. The pressure may also be greater than atmospheric pressure, or less than atmospheric pressure (e.g., a vacuum) in some embodiments. For example, a first pressure may be applied to substantially all of the different sources of fluid, and/or a second pressure may be applied at an outlet of the device to urge fluid movement within the device. The first pressure is typically greater than the second pressure. In various embodiments, the first pressure and the second pressure may each be greater than atmospheric pressure, each less than atmospheric pressure, one may be greater than and one less than atmospheric pressure, one may be at atmospheric pressure and the other at a greater or lesser pressure, or the like.

In some embodiments, the different sources of fluid may be open to a common environment containing a common pressurizing fluid, for instance, air or water. The pressurizing fluid may be chosen to be able to remain substantially separate from the fluid within the different sources of fluid. In one set of embodiments, the pressurizing fluid may be a fluid in a different phase (e.g., a gas such as air, nitrogen, CO₂, etc., for example, if the fluids within the different sources of fluid are liquid), and/or the pressurizing fluid may be chosen to be one that is substantially immiscible with the fluid within the different sources of fluid, e.g., if the fluids are both liquids. For example, if the fluids within the different sources of fluid are aqueous, an oil that is substantially immiscible with the aqueous fluids may be used. Examples of oils that are substantially immiscible with aqueous fluids, and that can be used accordingly, are discussed herein. In some embodiments, the pressurizing fluid may be substantially the same as the carrying fluid used to carry droplets produced within droplet-making units, although in other embodiments, the fluids may not be substantially the same.

A non-limiting example of such a system is now discussed, referring again to Fig. 1. In this figure, a plurality of sources of droplet fluid 21, 22, 23, 24, and 25, each containing droplet fluid 31, 32, 33, 34, and 35, is shown. Again, five sources are shown in this figure by way of example only, and other numbers of sources of droplet fluid may be present in other embodiments. Each of these sources of droplet fluid may be open to a common environment 15. Common environment 15, in certain embodiments, can contain a gas such as air, argon, nitrogen, etc. For example, microfluidic system 10 may be contained within a pressure chamber, which contains common environment 15. The pressure chamber may be chosen so as to be able to substantially retain a pressure therein, e.g., a pressure that is greater than or less than atmospheric pressure. The pressure in the pressure chamber may be controlled, for example, using a pressure regulator, a pump, or other suitable pressure source able to alter pressure. Many such pressure sources and pressure chambers are commercially available. By controlling the pressure of common environment 15, which acts on each of the plurality of sources of droplet fluid 21, 22, 23, 24, and 25, the pressure acting on each of these plurality of sources of droplet fluid may be controlled, e.g., such that the pressure applied to substantially all of the different sources of droplet fluid is substantially the same.

In certain embodiments, the pressure used to deliver a second fluid (e.g., a carrier fluid) from a source of the second fluid into the microfluidic device may be the same or different than the pressure used to deliver fluid from the different sources of fluid discussed above. In some cases, the pressure used to deliver the second fluid may be controlled independently of the pressure used to deliver the other fluids. The same or different mechanisms may be used to control the pressure of substantially each fluid. For example, the pressure used to deliver the second fluid may be applied or controlled using a syringe, a piston, or other mechanical device, by applying a pressurizing fluid to the second fluid, or the like.

In some cases, the pressure to any one or more of these sources (e.g., to the second fluid and/or one or more of the different sources of first fluid) may be controlled based on the plurality of droplets produced within the microfluidic device. For example, if droplets produced within droplet-making units within a microfluidic device are too large or too small, if too many or too few droplets are being produced, if too many or too few of a certain type of droplet are being produced, the relevant pressures may be altered accordingly to correct the problem. As other examples, the pressure may be controlled based on the relative amounts of fluid (e.g., first and second fluids) that are produced within fluidic units, the amount or degree of reaction occurring within the fluidic units, etc. Any suitable technique may be used to determine such fluids, e.g., fluorescence imaging, microscopy (e.g., light microscopy), laser light scattering, or the like.

In certain aspects of the invention, one or more fluids (e.g., first and/or second fluids entering a fluidic unit) may contain additional entities or species, for example, other chemical, biochemical, or biological entities (e.g., dissolved or suspended in the fluid), cells, particles, gases, molecules, pharmaceutical agents, drugs, DNA, RNA, proteins, fragrance, reactive agents, biocides, fungicides, preservatives, chemicals, or the like. For example, one or more cells and/or one or more cell types can be contained within a fluid, e.g., for encapsulation within a droplet, for reaction with another species, etc.

In certain aspects of the invention, a set of droplets may be produced within the microfluidic device. The set of droplets, may comprise some or all of the droplets produced within the microfluidic device. For example, at least about 30%, at least about 40%, at least about 50%, at least about 60%, at least about 70%, at least about 80%, at least about 90%, or about 100% of the droplets produced within the microfluidic device may from a set of droplets. In some cases, the set of droplets may have a certain or particular characteristic, e.g., being monodisperse, comprising droplet fluid from the same or different sources of droplet fluid, contain different species and/or the same species at different concentrations, etc. In some cases, there may be other droplets present, not part of the set, having different characteristics. In other embodiments however, there may be no such droplets present and all droplets produced within the microfluidic device from the set of droplets.

For example, in some aspects of the invention, a monodisperse set of droplets may be produced, e.g., in one or more droplet-making units. The shape and/or size of the fluidic droplets can be determined, for example, by measuring the average diameter or other characteristic dimension of the droplets. The "average diameter" of a plurality or series of droplets is the arithmetic average of the average diameters of each of the droplets. Those of ordinary skill in the art will be able to determine the average diameter (or other characteristic dimension) of a plurality or series of droplets, for example, using laser light scattering, microscopic examination, or other known techniques. The average diameter of a single droplet, in a non-spherical droplet, is the diameter of a perfect sphere having the same volume as the non-spherical droplet. The average diameter of a droplet (and/or of a plurality or series of droplets) may be, for example, less than about 1 mm, less than about 500 micrometers, less than about 200 micrometers, less than about 100 micrometers, less than about 75 micrometers, less than about 50 micrometers, less than about 25 micrometers, less than about 10 micrometers, or less than about 5 micrometers in some cases. The average diameter may also be at least about 1 micrometer, at least about 2 micrometers, at least about 3 micrometers, at least about 5 micrometers, at least about 10 micrometers, at least about 15 micrometers, or at least about 20 micrometers in certain cases.

In some embodiments, the monodisperse set of droplets may have an overall average diameter and a distribution of diameters such that no more than about 5%, no more than about 2%, or no more than about 1% of the particles have a diameter less than about 90% (or less than about 95%, or less than about 99%) and/or greater than about 110% (or greater than about 105%, or greater than about 101%) of the overall average diameter of the plurality of particles. In some embodiments, the plurality of droplets may have an overall average diameter and a distribution of diameters such that the coefficient of variation of the cross-sectional diameters of the droplets is less than about 10%, less than about 5%, less than about 2%, between about 1% and about 10%, between about 1% and about 5%, or between about 1% and about 2%. The coefficient of variation can be determined by those of ordinary skill in the art, and may be defined as the standard deviation divided by the mean.

In some embodiments, droplets may be produced within the device at relatively high rates. For example, the droplet production within the device of a single droplet making unit may be between approximately 100 Hz and 5,000 Hz (droplets/second). In some cases, the rate of droplet production may be at least about 100 Hz, at least about 200 Hz, at least about 300 Hz, at least about 500 Hz, at least about 750 Hz, at least about 1,000 Hz, at least about 2,000 Hz, at least about 3,000 Hz, at least about 4,000 Hz, at least about 5,000 Hz, at least about 7,500 Hz, at least about 10,000 Hz, etc. The overall rate of droplet production within the device, in some embodiments, would be equal to these rates multiplied by the number of droplet-making units present (e.g., 6, 24, 96, 384, or 1,536, etc.).

In some embodiments, the volume of droplets produced in the device may be relatively high. For example, the volumetric rate of droplet production may be at least about 1 ml of droplets per second (i.e., determined the total volume of all of the droplets produced within the microfluidic device, on a per-second basis), and in some cases, the volumetric rate of droplet production may be at least about 2 ml of droplets per second, at least about 3 ml of droplets per second, at least about 5 ml of droplets per second, at least about 10 ml of droplets per second, at least about 20 ml of droplets per second, at least about 30 ml of droplets per second, at least about 50 ml of droplets per second, etc. The droplets may be produced under "dripping" or "jetting" conditions, according to certain embodiments of the invention.

In addition, higher rates or production of larger quantities of droplets can be facilitated by the parallel use of multiple devices in some instances. For example, in some cases, relatively large numbers of devices such as the ones described herein may be used in parallel, for example at least about 10 devices, at least about 30 devices, at least about 50 devices, at least about 75 devices, at least about 100 devices, at least about 200 devices, at least about 300 devices, at least about 500 devices, at least about 750 devices, or at least about 1,000 devices or more may be operated in parallel. In certain instances, the devices may comprise different channels, orifices, microfluidics, etc. The devices may be commonly controlled, or separately controlled, and can be provided with common or separate sources of fluids, depending on the application. Examples of such systems are also described in Int. Patent Application Serial No. PCT/US2010/000753, filed March 12, 2010, entitled "Scale-up of Microfluidic Devices," by Romanowsky, et al., published as WO 2010/104597 on September 16, 2010.

As fluid viscosity can affect droplet formation, in some cases the viscosity of any of the fluids in the fluidic droplets may be adjusted by adding or removing components, such as diluents, that can aid in adjusting viscosity. For example, in some embodiments, the viscosity of the droplet fluid and the carrying fluid are equal or substantially equal. In other embodiments, the carrying fluid may exhibit a viscosity that is substantially different from the droplet fluid. A substantial difference in viscosity means that the difference in viscosity between the two fluids can be measured on a statistically significant basis.

The droplets may be used for any suitable application, in various aspects. For example, using the methods and devices described herein, in some embodiments, a set of droplets having consistently sized droplets and/or concentrations of droplets can be produced. In some embodiments, for instance, a population of droplets containing various species may be created. In certain cases, a single droplet can be used to provide a specific quantity of a drug. In addition, combinations of compounds or drugs may be stored, transported, or delivered in a droplet. Thus, in some embodiments, a plurality of droplets, some or all of which contain compounds, drugs, and/or other species, may be produced.

In another set of embodiments, the droplets produced within the device may be used to define a library. A library may contain droplets that are all substantially the same size (or different sizes, in some cases). In some embodiments, the droplets can have substantially the same composition (for example, the same solvent), but differ in the species contained within the droplets. Other non-limiting examples of libraries have been previously discussed herein. For instance, a first member of a library may include droplets containing a first species, and a second member of a library may include droplets containing a second species, the first species at a different concentration, a first species and a second species, etc. Such libraries may be useful, for example, for various applications, such as nucleic acid sequencing applications, screening assays, high-throughput screening, or the like. In some embodiments, the composition may comprise at least about 5, at least about 8, at least about 10, at least about 20, at least about 50, at least about 64, at least about 100, at least about 128, at least about 200, at least about 500, at least about 1000, at least about 4096, at least about 10,000, at least about 50,000, etc. mutually distinguishable species. As non-limiting examples, the library may contain, as species, various proteins, nucleic acids, cells, enzymes, antibodies, drugs, pharmaceutical agents, etc. Other examples of species are discussed herein.

In some embodiments, as non-limiting examples, the library can comprise every possible sequence for a set of nucleic acid sequences having a certain length or lengths. In another embodiment, the library may comprise at least about 30%, at least about 50%, at least about 80%, at least about 85%, at least about 90%, at least about 95%, or at least about 100% of all possible sequences having a certain length or lengths.

Certain aspects of the invention are generally directed to devices containing channels such as those described above. In some cases, some or all of the channels may be microfluidic channels. There can be any number of channels, including microfluidic channels, within the device, and the channels may be arranged in any suitable configuration. The channels may be all interconnected, or there can be more than one network of channels present. The channels may independently be straight, curved, bent, etc. In some cases, there may be a relatively large number and/or a relatively large length of channels present in the device. For example, in some embodiments, the channels within a device, when added together, can have a total length of at least about 100 micrometers, at least about 300 micrometers, at least about 500 micrometers, at least about 1 mm, at least about 3 mm, at least about 5 mm, at least about 10 mm, at least about 30 mm, at least 50 mm, at least about 100 mm, at least about 300 mm, at least about 500 mm, at least about 1 m, at least about 2 m, or at least about 3 m in some cases. As another example, a device can have at least 1 channel, at least 3 channels, at least 5 channels, at least 10 channels, at least 20 channels, at least 30 channels, at least 40 channels, at least 50 channels, at least 70 channels, at least 100 channels, etc.

In some embodiments, at least some of the channels within the device are microfluidic channels. "Microfluidic device," as used herein, refers to a device including at least one fluid channel having a cross-sectional dimension of less than about 1 mm, i.e., a microfluidic channel. The "cross-sectional dimension" of the channel is measured perpendicular to the direction of net fluid flow within the channel. Thus, for example, some or all of the fluid channels in a device can have a maximum cross-sectional dimension less than about 2 mm, and in certain cases, less than about 1 mm. In one set of embodiments, all fluid channels in a device are microfluidic and/or have a largest cross sectional dimension of no more than about 2 mm or about 1 mm. In certain embodiments, the fluid channels may be formed in part by a single component (e.g. an etched substrate or molded unit), e.g., as part of a layer within the device. Of course, larger channels, tubes, chambers, reservoirs, etc. can be used to store fluids and/or deliver fluids to various elements or systems in other embodiments of the invention.

A channel within the device can have any cross-sectional shape (circular, oval, triangular, irregular, square or rectangular, or the like) and can be covered or uncovered. In embodiments where it is completely covered, at least one portion of the channel can have a cross-section that is completely enclosed, or the entire channel may be completely enclosed along its entire length with the exception of its inlets and/or outlets or openings. A channel may also have an aspect ratio (length to average cross sectional dimension) of at least 2:1, more typically at least 3:1, 4:1, 5:1, 6:1, 8:1, 10:1, 15:1, 20:1, or more. An open channel generally will include characteristics that facilitate control over fluid transport, e.g., structural characteristics (an elongated indentation) and/or physical or chemical characteristics (hydrophobicity vs. hydrophilicity) or other characteristics that can exert a force (e.g., a containing force) on a fluid. The fluid within the channel may partially or completely fill the channel. In some cases where an open channel is used, the fluid may be held within the channel, for example, using surface tension (i.e., a concave or convex meniscus).

The channel may be of any size, for example, having a largest dimension perpendicular to net fluid flow of less than about 5 mm or 2 mm, or less than about 1 mm, less than about 500 microns, less than about 200 microns, less than about 100 microns, less than about 60 microns, less than about 50 microns, less than about 40 microns, less than about 30 microns, less than about 25 microns, less than about 10 microns, less than about 3 microns, less than about 1 micron, less than about 300 nm, less than about 100 nm, less than about 30 nm, or less than about 10 nm. In some cases, the dimensions of the channel are chosen such that fluid is able to freely flow through the device or substrate. The dimensions of the channel may also be chosen, for example, to allow a certain volumetric or linear flow rate of fluid in the channel. Of course, the number of channels and the shape of the channels can be varied by any method known to those of ordinary skill in the art. In some cases, more than one channel may be used. For example, two or more channels may be used, where they are positioned adjacent or proximate to each other, positioned to intersect with each other, etc.

In certain embodiments, one or more of the channels within the device may have an average cross-sectional dimension of less than about 10 cm. In certain instances, the average cross-sectional dimension of the channel is less than about 5 cm, less than about 3 cm, less than about 1 cm, less than about 5 mm, less than about 3 mm, less than about 1 mm, less than 500 micrometers, less than 200 micrometers, less than 100 micrometers, less than 50 micrometers, or less than 25 micrometers. The "average cross-sectional dimension" is measured in a plane perpendicular to net fluid flow within the channel. If the channel is non-circular, the average cross-sectional dimension may be taken as the diameter of a circle having the same area as the cross-sectional area of the channel. Thus, the channel may have any suitable cross-sectional shape, for example, circular, oval, triangular, irregular, square, rectangular, quadrilateral, or the like. In some embodiments, the channels are sized so as to allow laminar flow of one or more fluids contained within the channel to occur.

The channel may also have any suitable cross-sectional aspect ratio. The "cross-sectional aspect ratio" is, for the cross-sectional shape of a channel, the largest possible ratio (large to small) of two measurements made orthogonal to each other on the cross-sectional shape. For example, the channel may have a cross-sectional aspect ratio of less than about 2:1, less than about 1.5:1 , or in some cases about 1:1 (e.g., for a circular or a square cross-sectional shape). In other embodiments, the cross-sectional aspect ratio may be relatively large. For example, the cross-sectional aspect ratio may be at least about 2:1, at least about 3:1, at least about 4:1, at least about 5:1, at least about 6:1, at least about 7:1, at least about 8:1, at least about 10:1, at least about 12:1, at least about 15:1, or at least about 20:1.

As mentioned, the channels can be arranged in any suitable configuration within the device. Different channel arrangements may be used, for example, to manipulate fluids, droplets, and/or other species within the channels. For example, channels within the device can be arranged to create droplets (e.g., discrete droplets, single emulsions, double emulsions or other multiple emulsions, etc.), to mix fluids and/or droplets or other species contained therein, to screen or sort fluids and/or droplets or other species contained therein, to split or divide fluids and/or droplets, to cause a reaction to occur (e.g., between two fluids, between a species carried by a first fluid and a second fluid, or between two species carried by two fluids to occur), or the like.

Non-limiting examples of systems for manipulating fluids, droplets, and/or other species are discussed below. Additional examples of suitable manipulation systems can also be seen in U.S. Patent Application Serial No. 11/246,911, filed October 7, 2005, entitled "Formation and Control of Fluidic Species," by Link, *et al.,* published as U.S. Patent Application Publication No. 2006/0163385 on July 27, 2006; U.S. Patent Application Serial No. 11/024,228, filed December 28, 2004, entitled "Method and Apparatus for Fluid Dispersion," by Stone, *et al.,* now U.S. Patent No. 7,708,949, issued May 4, 2010; U.S. Patent Application Serial No. 11/885,306, filed August 29, 2007, entitled "Method and Apparatus for Forming Multiple Emulsions," by Weitz, *et al.,* published as U.S. Patent Application Publication No. 2009/0131543 on May 21, 2009; and U.S. Patent Application Serial No. 11/360,845, filed February 23, 2006, entitled "Electronic Control of Fluidic Species," by Link, et al, published as U.S. Patent Application Publication No. 2007/0003442 on January 4, 2007. As non-limiting examples, one or more fluids in the microfluidic device may be combined with other fluids (e.g., containing reagents, species, etc.), diluted, reacted, etc., e.g., before and/or after the formation of droplets.

A variety of materials and methods, according to certain aspects of the invention, can be used to form devices or components such as those described herein, e.g., channels such as microfluidic channels, chambers, etc. For example, various devices or components can be formed from solid materials, in which the channels can be formed via micromachining, film deposition processes such as spin coating and chemical vapor deposition, laser fabrication, photolithographic techniques, etching methods including wet chemical or plasma processes, and the like. See, for example, Scientific American, 248:44-55, 1983 (Angell, et *al*)*.*

In one set of embodiments, various structures or components of the devices described herein can be formed of a polymer, for example, an elastomeric polymer such as polydimethylsiloxane ("PDMS"), polytetrafluoroethylene ("PTFE" or Teflon®), or the like. For instance, according to one embodiment, a microfluidic channel may be implemented by fabricating the fluidic system separately using PDMS or other soft lithography techniques (details of soft lithography techniques suitable for this embodiment are discussed in the references entitled "Soft Lithography," by Younan Xia and George M. Whitesides, published in the Annual Review of Material Science, 1998, Vol. 28, pages 153-184, and "Soft Lithography in Biology and Biochemistry," by George M. Whitesides, Emanuele Ostuni, Shuichi Takayama, Xingyu Jiang and Donald E. Ingber, published in the Annual Review of Biomedical Engineering, 2001, Vol. 3, pages 335-373.

Other examples of potentially suitable polymers include, but are not limited to, polyethylene terephthalate (PET), polyacrylate, polymethacrylate, polycarbonate, polystyrene, polyethylene, polypropylene, polyvinylchloride, cyclic olefin copolymer (COC), polytetrafluoroethylene, a fluorinated polymer, a silicone such as polydimethylsiloxane, polyvinylidene chloride, bis-benzocyclobutene ("BCB"), a polyimide, a fluorinated derivative of a polyimide, or the like. Combinations, copolymers, or blends involving polymers including those described above are also envisioned. The device may also be formed from composite materials, for example, a composite of a polymer and a semiconductor material.

In some embodiments, various structures or components of the device are fabricated from polymeric and/or flexible and/or elastomeric materials, and can be conveniently formed of a hardenable fluid, facilitating fabrication via molding (e.g. replica molding, injection molding, cast molding, hot embossing, etc.). The hardenable fluid can be essentially any fluid that can be induced to solidify, or that spontaneously solidifies, into a solid capable of containing and/or transporting fluids contemplated for use in and with the fluidic network. In one embodiment, the hardenable fluid comprises a polymeric liquid or a liquid polymeric precursor (i.e. a "prepolymer"). Suitable polymeric liquids can include, for example, thermoplastic polymers, thermoset polymers, waxes, metals, or mixtures or composites thereof heated above their melting point. As another example, a suitable polymeric liquid may include a solution of one or more polymers in a suitable solvent, which solution forms a solid polymeric material upon removal of the solvent, for example, by evaporation. Such polymeric materials, which can be solidified from, for example, a melt state or by solvent evaporation, are well known to those of ordinary skill in the art. A variety of polymeric materials, many of which are elastomeric, are suitable, and are also suitable for forming molds or mold masters, for embodiments where one or both of the mold masters is composed of an elastomeric material. A non-limiting list of examples of such polymers includes polymers of the general classes of silicone polymers, epoxy polymers, and acrylate polymers. Epoxy polymers are characterized by the presence of a three-membered cyclic ether group commonly referred to as an epoxy group, 1,2-epoxide, or oxirane. For example, diglycidyl ethers of bisphenol A can be used, in addition to compounds based on aromatic amine, triazine, and cycloaliphatic backbones. Another example includes the well-known Novolac polymers. Non-limiting examples of silicone elastomers suitable for use according to the invention include those formed from precursors including the chlorosilanes such as methylchlorosilanes, ethylchlorosilanes, phenylchlorosilanes, etc.

Silicone polymers are used in certain embodiments, for example, the silicone elastomer polydimethylsiloxane. Non-limiting examples of PDMS polymers include those sold under the trademark Sylgard by Dow Chemical Co., Midland, MI, and particularly Sylgard 182, Sylgard 184, and Sylgard 186. Silicone polymers including PDMS have several beneficial properties simplifying fabrication of various structures of the invention. For instance, such materials are inexpensive, readily available, and can be solidified from a prepolymeric liquid via curing with heat. For example, PDMSs are typically curable by exposure of the prepolymeric liquid to temperatures of about, for example, about 65 °C to about 75 °C for exposure times of, for example, about an hour. Also, silicone polymers, such as PDMS, can be elastomeric and thus may be useful for forming very small features with relatively high aspect ratios, necessary in certain embodiments of the invention. Flexible (e.g., elastomeric) molds or masters can be advantageous in this regard.
One advantage of forming structures such as microfluidic structures or channels from silicone polymers, such as PDMS, is the ability of such polymers to be oxidized, for example by exposure to an oxygen-containing plasma such as an air plasma, so that the oxidized structures contain, at their surface, chemical groups capable of cross-linking to other oxidized silicone polymer surfaces or to the oxidized surfaces of a variety of other polymeric and non-polymeric materials. Thus, structures can be fabricated and then oxidized and essentially irreversibly sealed to other silicone polymer surfaces, or to the surfaces of other substrates reactive with the oxidized silicone polymer surfaces, without the need for separate adhesives or other sealing means. In most cases, sealing can be completed simply by contacting an oxidized silicone surface to another surface without the need to apply auxiliary pressure to form the seal. That is, the pre-oxidized silicone surface acts as a contact adhesive against suitable mating surfaces. Specifically, in addition to being irreversibly sealable to itself, oxidized silicone such as oxidized PDMS can also be sealed irreversibly to a range of oxidized materials other than itself including, for example, glass, silicon, silicon oxide, quartz, silicon nitride, polyethylene, polystyrene, glassy carbon, and epoxy polymers, which have been oxidized in a similar fashion to the PDMS surface (for example, via exposure to an oxygen-containing plasma). Oxidation and sealing methods useful in the context of the present invention, as well as overall molding techniques, are described in the art, for example, in an article entitled "Rapid Prototyping of Microfluidic Systems and Polydimethylsiloxane," Anal. Chem., 70:474-480, 1998 (Duffy et *al*).

Another advantage to forming channels or other structures (or interior, fluid- contacting surfaces) from oxidized silicone polymers is that these surfaces can be much more hydrophilic than the surfaces of typical elastomeric polymers (where a hydrophilic interior surface is desired). Such hydrophilic channel surfaces can thus be more easily filled and wetted with aqueous solutions than can structures comprised of typical, unoxidized elastomeric polymers or other hydrophobic materials.

In some, but not all, embodiments, one or more walls or portions of a channel may be coated, e.g., with a coating material, including photoactive coating materials. The coating materials can be used in certain instances to control and/or alter the hydrophobicity of the wall of a channel. In some embodiments, a sol-gel is provided that can be formed as a coating on a substrate such as the wall of a channel such as a microfluidic channel. One or more portions of the sol-gel can be reacted to alter its hydrophobicity, in some cases. For example, a portion of the sol-gel may be exposed to light, such as ultraviolet light, which can be used to induce a chemical reaction in the sol-gel that alters its hydrophobicity. The sol-gel may include a photoinitiator which, upon exposure to light, produces radicals. Optionally, the photoinitiator is conjugated to a silane or other material within the sol-gel. The radicals so produced may be used to cause a condensation or polymerization reaction to occur on the surface of the sol-gel, thus altering the hydrophobicity of the surface. In some cases, various portions may be reacted or left unreacted, e.g., by controlling exposure to light (for instance, using a mask).

The following documents may be of interest: U.S. Patent Application Serial No. 11/246,911, filed October 7, 2005, entitled "Formation and Control of Fluidic Species," by Link, et ah, published as U.S. Patent Application Publication No. 2006/0163385 on July 27, 2006; U.S. Patent No. 7,708,949, issued May 4, 2010, entitled "and Apparatus for Fluid Dispersion," by Stone, et ah ; U.S. Patent Application Serial No. 11/360,845, filed February 23, 2006, entitled "Electronic Control of Fluidic Species," by Link, et ah, published as U.S. Patent Application Publication No. 2007/0003442 on January 4, 2007; U.S. Patent Application Serial No. 11/885,306, filed August 29, 2007, entitled "Method and Apparatus for Forming Multiple Emulsions," by Weitz, et al, published as U.S. Patent Application Publication No. 2009/0131543 on May 21, 2009;

International Patent Application No. PCT/US2010/000753, filed March 12, 2010, entitled "Scale-up of Microfluidic Devices," by Romanowsky, et ah, published as WO 2010/104597 on September 16, 2010; International Patent Application No. PCT/2010/054050, filed October 26, 2010, entitled "Droplet Creation Techniques," by Weitz, et al. ; and International Patent Application No. PCT/US2009/005184, filed September 17, 2009, entitled "Creation of Libraries of Droplets and Related Species," by Weitz, et al, published as WO 2010/033200 on March 25, 2010.

The following examples are intended to illustrate certain embodiments of the present invention, but do not exemplify the full scope of the invention.

### EXAMPLE 1

This example illustrates the fabrication of a device in accordance with one embodiment of the invention.

The microfluidic devices for both library generation and droplet detection were fabricated in PDMS by soft lithography. A typical device included two or three layers of PDMS (polydimethylsiloxane, Sylgard 184, Dow Corning), a commercially available, heat-curable silicone rubber.

Three-inch (1 inch = 2.54 cm) silicon wafers were spin-coated with SU-8 series photoresist or laminated with TMMF (Tokyo Kogyo Co., Ltd.) dry film resist. After UV exposure and development, a thicker layer for the distribution channels and guide holes was applied to the wafer, which was then again exposed with UV light and developed. The masters were placed in a petri dish and cast with PDMS (Sylgard, curing agent:base = 1:10). After curing at 65 °C, the PDMS was peeled off the master and through-holes were punched. After cleaning with isopropanol, the surfaces of two slabs to be bonded together were activated with oxygen plasma and brought into contact with each other. After baking at 65 °C, the PDMS slabs were irreversibly bonded.

The channel height of the PDMS devices was given by the film thickness of the photoresist. For this application, typical values were 30 micrometers height for drop makers and 200 to 400 micrometers for the distribution and collection channels. The first layer of PDMS contained the inlets for the individual samples to be encapsulated, inlet filters, and resistor channels, the array of junctions that serve for drop making, and distribution and collection channels for each two rows of drop makers. Each individual drop maker had its own sample inlet that included a 0.75 mm diameter through-hole, into which an about 1 inch long piece of 1/32 inch OD tubing was fitted to serve as an inlet tubing for each individual drop maker.

The second PDMS layer contained mirror images of the distribution and collection channels to increase their cross-section and via-holes to the third layer. The third layer contained two channels that connected the individual distribution and collection channels and one inlet hole for the oil phase and one outlet hole for the emulsion. The different layers of PDMS were fabricated individually and plasma-bonded on top of each other.

The dimensions of the dropmaker array were adapted to a standard 384 wellplate. The footprint for an individual device was 4.5 mm x 4.5 mm. Hence, an array of 8 x 12 = 96 dropmakers took up a total area of 36 x 54 mm, which conveniently fitted onto a three-inch wafer that is routinely used for rapid prototyping.

### EXAMPLE 2

This example illustrates a method of library generation, in accordance with one embodiment of the invention.

The setup for generating a droplet library used in this example included a pressure chamber with an inlet for oil and outlet tubing for the emulsion connected to the device, and a connector for compressed air. The pressure of the chamber was set by a manual pressure regulator connected to the compressed air line of the lab. A stop valve was positioned between the regulator and the pressure chamber, and a ventilation valve was positioned on the chamber. Both were used to pressurize or vent the pressure chamber.

The oil inlet was connected to a reservoir bottle containing the oil and surfactant, which was pressurized with compressed air. A manual pressure regulator was used to set the pressure, and a stop valve was used to control the flow without changing the pressure of the reservoir.

Samples were prepared in a 384 well plate, typically with a volume of 30 microliters to 70 microliters for each well. The parallel drop making device (see Example 1) was placed onto the plate such that the inlet tubings stuck into the wells of the plate, so that each individual sample goes into its dedicated drop maker. The well plate with the device on it was placed into the pressure chamber, and the oil inlet and emulsion outlet tubes inside the pressure chamber were connected to the device, before the chamber was closed tightly.

In a typical run, pressure values for both the oil reservoir and the pressure chamber were set with the pressure regulators, then both stop valves are opened. By this, oil flows into the device and the chamber were pressurized. The pressure drop between the inside of the chamber to the outlet of the device drove all the liquid samples through the device. When all the air had come out and the device was running stably, the emulsion was collected at the outlet tubing. As all devices were running in parallel and the outlets of individual drop makers went into corresponding collection channels, the emulsion collected at the outlet tubing was a mixture of all samples. This accordingly generated the library.

In some cases, a sample to be screened may be combined with a droplet library, e.g., as was discussed above. Once a droplet library has been generated, it can be stored and be used for one or more experiments. A given sample to be screened may be mixed with all samples of the library and the outcome of a chemical or biochemical reaction may be measured. In some cases, using droplets, a constant volume of the sample to be screened can be injected into the droplets of the library, e.g. by pairing up droplets and merging them, or through picoinjection. As the droplet library is a random mixture of droplets from all members of the library, Poisson statistics holds, so a sufficient number of droplets needs to be processed to cover the whole library. Also, just by processing more droplets, the coverage can be increased arbitrarily as desired.

### EXAMPLE 3

This example illustrates detection and data analysis, in another embodiment of the invention.

Droplets such as those discussed above can be collected and stored in a syringe, or transferred to a syringe prior to reinjection into a detection device. In case of fluorinated oils, the aqueous droplets have a lower density than the surrounding oil phase. The droplets were reinjected as a closely packed emulsion, e.g., where they were sufficiently stabilized by surfactant and/or did not merge when they come into close contact.

The detection device included a cross-junction where the closely packed droplets were spaced out by additional oil before they enter the detection channel. In the case of monodisperse droplets and even flow rates, they were substantially evenly spaced and periodic.

For fluorescence detection, an excitation laser (488 nm, 50 mW) was focused into a detection channel, and the droplets flowed past. When the laser hits a droplet, fluorophores within the droplet were excited, and the emitted light was collected by the objective of a microscope (40x, 0.85 NA). With a series of dichroic mirrors and photomultiplier tubes, the fluorescent signal of each droplet was detected in a number of independent channels. The signal from the photomultipliers was processed in real time by a FPGA card performing peak detection, at an acquisition rate up to 200 kHz. The peak data was transferred to a computer where the data is saved, processed and visualized. All software used in this example was written in Labview (National Instruments) and Python (SciPy).

For a screening experiment, one or more channels can be used to detect the outcome of an assay, and one or more other channels can be used for fluorescent barcode labels. For example, one or more fluorescent dyes were added at different concentration levels to the samples making up the library, prior to encapsulation in droplets. The different concentration levels resulted in discrete levels of fluorescent signal, i.e. discrete intensity peaks for each channel. For two or more labels, for example, the dyes were added at fixed concentrations for each individual channel. The measured intensities resulted then in discrete clusters in two- or more dimensional detection space. By clustering algorithms, e.g. k-means, each individual droplet was assigned to a cluster or droplets, where each cluster corresponded to a different sample that had been encapsulated containing a combination of fluorophores to provide a unique label. For example, with Nₖ levels in k channels, the total number of samples is given as the product over Nₖ, e.g. 10⁴ samples in case of four channels with each 10 discrete levels.

While several embodiments of the present invention have been described and illustrated herein, those of ordinary skill in the art will readily envision a variety of other means and/or structures for performing the functions and/or obtaining the results and/or one or more of the advantages described herein, and each of such variations and/or modifications is deemed to be within the scope of the present invention. More generally, those skilled in the art will readily appreciate that all parameters, dimensions, materials, and configurations described herein are meant to be exemplary and that the actual parameters, dimensions, materials, and/or configurations will depend upon the specific application or applications for which the teachings of the present invention is/are used. Those skilled in the art will recognize, or be able to ascertain using no more than routine experimentation, many equivalents to the specific embodiments of the invention described herein. It is, therefore, to be understood that the foregoing embodiments are presented by way of example only and that, within the scope of the appended claims and equivalents thereto, the invention may be practiced otherwise than as specifically described and claimed. The present invention is directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the scope of the present invention.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of." "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

It should also be understood that, unless clearly indicated to the contrary, in any methods claimed herein that include more than one step or act, the order of the steps or acts of the method is not necessarily limited to the order in which the steps or acts of the method are recited.

## Claims

1. A method, comprising:
providing a microfluidic device (58, 100) in a pressure chamber comprising a plurality of droplet-making units (51, 52, 53, 54, 55, 100, 191, 192, 193), each of the droplet-making units in fluidic communication with a different source of droplet fluid (21, 22, 23, 24, 25, 105) and a common source of carrier fluid (64), each of the droplet-making units comprising an outlet channel (138, 172, 173, 174, 175) exiting an intersection (130), each of the outlet channels in fluidic communication with a common collector channel (77, 171,);
applying the same pressure and/or pressure drop via the pressure chamber to all of the different sources of droplet fluid to cause droplet fluid (31, 32, 33, 34, 35, 105) to move from the different sources of droplet fluid into the common collector channel; and
producing, within the microfluidic device, a set comprising a plurality of droplets (71, 72, 73, 74, 75, 135), each droplet of the set comprising droplet fluid from only one of the different sources of droplet fluid, the plurality of droplets of the set being contained within carrier fluid (62, 115) from the common source of carrier fluid
wherein at least one of the droplet-making units comprises:
an inlet (108) for receiving droplet fluid from one of the different sources of droplet fluid, the inlet in fluidic communication via a first microfluidic channel (102) with the intersection of microfluidic channels; and
a second microfluidic channel (66, 119, 111, 161) extending from the intersection, the second microfluidic channel in fluid communication with the common source of carrier fluid;
wherein at least one of the first or second microfluidic channels has a length within the droplet-making unit that is greater than two times the largest dimension of the droplet-making unit, the largest dimension of the droplet-making unit being the longest straight line that can be completely contained within the droplet-making unit.

2. The method of claim 1, wherein at least some of the different sources of droplet fluid are contained within an ANSI microwell plate, and applying the same pressure and/or pressure drop comprises applying a pressure to at least a portion of the ANSI microwell plate.

3. The method of any one of claims 1-2, further comprising applying pressure to the common source of carrier fluid to move the carrier fluid from the common source of carrier fluid into the microfluidic device, preferably wherein the pressure applied to the different sources of droplet fluid and the pressure applied to the common source of carrier fluid are the same, preferably further comprising altering the pressure applied to one or both of the pressure applied to the different sources of droplet fluid and the pressure applied to the common source of carrier fluid based on the plurality of droplets of the set produced within the microfluidic device, preferably comprising determining at least some of the plurality of droplets of the set produced within the microfluidic device, and altering the pressure applied to one or both of the pressure applied to the different sources of droplet fluid and the pressure applied to the common source of carrier fluid based on the determination, and/or comprising determining a composition of at least some of the plurality of droplets of the set produced within the microfluidic device, and altering the pressure applied to one or both of the pressure applied to the different sources of droplet fluid and the pressure applied to the common source of carrier fluid based on the determination.

4. The method of any one of claims 1-3, wherein:
(a) the pressure applied to all of the different sources of droplet fluid is greater than atmospheric pressure, or is less than atmospheric pressure; and/or
(b) the carrier fluid and each of the droplet fluids is immiscible; and/or
(c) the plurality of droplets of the set is monodisperse; and/or have an overall average dimension of less than 1 mm.

5. The method of any one of claims 1-4, comprising producing at least 100 droplets per second, preferably at least 10³ droplets per second, preferably at least 10⁴ droplets per second, and/or comprising producing at least 1 ml of droplets per second, preferably at least 10 ml of droplets per second.

6. An article, comprising:
a microfluidic device (58, 100) comprising a plurality of droplet-making units (51, 52, 53, 54, 55, 100, 191, 192, 193), each of the droplet-making units in fluidic communication with a different source of droplet fluid (21, 22, 23, 24, 25, 105) and a common source of carrier fluid (64), each of the droplet-making units comprising an outlet channel (138, 172, 173, 174, 175) exiting an intersection (130), each of the outlet channels in fluidic communication with a common collector channel (77, 171);
wherein at least one of the droplet-making units comprises:
an inlet (108) for receiving droplet fluid (31, 32, 33, 34, 35, 105) from one of the different sources of droplet fluid, the inlet in fluidic communication via a first microfluidic channel (102) with the intersection of microfluidic channels; and
a second microfluidic channel (66, 119, 111, 161) extending from the intersection, the second microfluidic channel in fluid communication with the common source of carrier fluid;
wherein at least one of the first or second microfluidic channels has a length within the droplet-making unit that is greater than two times the largest dimension of the droplet-making unit, the largest dimension of the droplet-making unit being the longest straight line that can be completely contained within the droplet-making unit.

7. The article of claim 6, further comprising a third microfluidic channel (112) extending from the intersection, preferably wherein:
(a) the third microfluidic channel is in fluid communication with the common source of carrier fluid; and/or
(b) at the intersection (130), the second microfluidic channel (111) and the third microfluidic channel intersect at an angle of 180°; and/or
(c) the second microfluidic channel and the third microfluidic channel are each in fluidic communication with the common source of carrier fluid via a different inlet to the droplet-making unit; and/or
(d) the second microfluidic channel and the third microfluidic channel are each in fluidic communication with the common source of carrier fluid via a common inlet to the droplet-making unit.

8. The article of any one of claims 6-7, wherein each of the first and second microfluidic channels has a length within the droplet-making unit that is greater than two times the largest dimension of the droplet-making unit, preferably greater than three times the largest dimension of the droplet-making unit.

9. The article of any one of claims 6-7, further comprising:
(a) an inlet filter (145) in fluidic communication with a centrally-positioned inlet, preferably wherein the inlet filter is positioned between the inlet (108) and the first microfluidic channel (102); and/or
(b) a carrier filter (141) positioned between an inlet (118) for carrier fluid (62, 115) to the droplet-making unit and the second microfluidic channel (111).

10. The article of any one of claims 6-7, wherein:
(a) at the intersection, the first microfluidic channel and the second microfluidic channel intersect at an angle of 90°, and/or wherein the intersection further comprises an outlet channel; and/or
(b) the outlet channel is positioned at an angle of 180° relative to the first microfluidic channel, and/or wherein the first channel, the second channel, and the outlet channel define a T-junction, and/or wherein the first channel, the second channel, and the outlet channel define a Y-junction, and/or wherein the first microfluidic channel and the second microfluidic channel are planar to each other; and/or
(c) the inlet is centrally positioned within the droplet-making unit, and/or comprises the centroid of the droplet-making unit, and/or is circular, and/or comprises a circular filter, and/or intersects a tube extending outwardly from the droplet-making unit.

11. The article of any one of claims 6-7, wherein the droplet-making units are positioned at a repeat spacing of 9 mm, 4.5 mm, or 2.25 mm.

12. The article of any one of claims 6-7, wherein at least some of the different sources of droplet fluid are contained within an ANSI microwell plate, preferably wherein:
(a) the microfluidic device is in fluid communication with at least 1/4 of the wells within the ANSI microwell plate; or
(b) the different sources of droplet fluid are contained within a 96-well ANSI microwell plate, a 384-well ANSI microwell plate, or a 1,536-well ANSI microwell plate; and/or
wherein the repeat spacing is 9 mm, 4.5 mm, or 2.25 mm.

13. The article of any one of claims 6-7, wherein:
(a) the plurality of droplet-making units are identical, preferably wherein the droplet-making units are identical disregarding rotations, reflections, and translations; and/or
(b) the microfluidic device comprises at least 24 droplet-making units, and/or
(c) the microfluidic device comprises a polymer, preferably wherein the microfluidic device comprises poly (dimethylsiloxane); and/or
(d) the microfluidic device further comprises a plurality of tubes (41, 42, 43, 44, 45) extending outwardly from each of the droplet-making units, preferably wherein each of the tubes fluidically connects one of the different sources of droplet fluid to the one of the droplet-making units, and/or
(e) the microfluidic device comprises a plurality of parallel channels (162, 163, 164, 165, 211, 212, 213) therein for distributing carrier fluid from the common source of carrier fluid to each of the droplet-making units, preferably wherein at least some of the plurality of parallel channels (172, 173, 174, 175, 221, 222, 223) are microfluidic channels, and/or wherein the microfluidic device comprises a plurality of parallel channels therein for collecting droplets produced by each of the droplet-making units, preferably wherein at least some of the plurality of parallel channels are microfluidic channels.

14. The article of any one of claims 6-7, wherein each of the droplet-making units comprises:
an inlet (108) for receiving droplet fluid from one of the different sources of droplet fluid, the inlet in fluidic communication via a first microfluidic channel (102) with an intersection (130) of microfluidic channels; and
a second microfluidic channel (66, 119, 111, 161) extending from the intersection, the second microfluidic channel in fluid communication with the common source of carrier fluid, preferably:
(a) wherein the inlet is centrally positioned within the droplet-making unit; and/or
(b) wherein at least one of the first or second microfluidic channels exhibits a first section and a second section that is antiparallel to the first section; and/or
(c) further comprising a third microfluidic channel (112) extending from the intersection, the third microfluidic channel in fluid communication with the common source of carrier fluid.

15. The article of any one of claims 6-7, wherein each of the droplet-making units comprises a dimensional restriction within a microfluidic channel, and/or wherein each of the different sources of droplet fluid has at least one component in common, preferably wherein the common component is a solvent, and/or wherein each of the different sources of droplet fluid contains the same solvent and a different species contained within the solvent.

## Patentansprüche

1. Verfahren, umfassend:
Bereitstellen einer Mikrofluidvorrichtung (58, 100) in einer Druckkammer, umfassend eine Vielzahl von Einheiten zur Herstellung von Tröpfchen (51, 52, 53, 54, 55, 100, 191, 192, 193), wobei jede der Einheiten zur Herstellung von Tröpfchen in Fluidkommunikation mit einer unterschiedlichen Quelle eines Tröpfchenfluids (21, 22, 23, 24, 25, 105) und einer gemeinsamen Quelle von Trägerfluid (64) steht, wobei jede der Einheiten zur Herstellung von Tröpfchen einen Auslasskanal (138, 172, 173, 174, 175) umfasst, der an einem Schnittpunt (130) austritt, wobei jeder der Auslasskanäle in Fluidkommunikation mit einem gemeinsamen Sammelkanal (77, 171) steht;
Beaufschlagen mit demselben Druck und/oder Druckabfall über die Druckkammer sämtlicher der verschiedenen Quellen von Tröpfchenfluid, um zu bewirken, dass sich das Tröpfchenfluid (31, 32, 33, 34, 35, 105) von den verschiedenen Quellen von Tröpfchenfluid in den gemeinsamen Sammelkanal bewegt; und
Produzieren, innerhalb der Mikrofluidvorrichtung, eines Satzes, umfassend eine Vielzahl von Tröpfchen (71, 72, 73, 74, 75, 135), wobei jedes Tröpfchen des Satzes Tröpfchenfluid von nur einer der verschiedenen Quellen von Tröpfchenfluid umfasst, wobei die Vielzahl von Tröpfchen des Satzes innerhalb eines Trägerfluids (62,115) von der gemeinsamen Quelle von Trägerfluid enthalten ist
wobei mindestens eine der Einheiten zur Herstellung von Tröpfchen Folgendes umfasst:
einen Einlass (108) zum Empfangen von Tröpfchenfluid von einer der verschiedenen Quellen von Tröpfchenfluid, wobei der Einlass in Fluidkommunikation über einen ersten Mikrofluidkanal (102) mit dem Schnittpunkt von Mikrofluidkanälen steht; und
einen zweiten Mikrofluidkanal (66, 119, 111, 161), der sich von dem Schnittpunkt erstreckt, wobei der zweite Mikrofluidkanal in Fluidkommunikation mit der gemeinsamen Quelle von Trägerfluid steht;
wobei mindestens einer des ersten oder des zweiten Mikrofluidkanals eine Länge innerhalb der Einheit zur Herstellung von Tröpfchen aufweist, die länger als das Zweifache der größten Dimension der Einheit zur Herstellung von Tröpfchen ist, wobei die größte Dimension der Einheit zur Herstellung von Tröpfchen die längste gerade Linie ist, die vollständig innerhalb der Einheit zur Herstellung von Tröpfchen enthalten sein kann.

2. Verfahren nach Anspruch 1, wobei mindestens einige der verschiedenen Quellen von Tröpfchenfluid innerhalb einer ANSI-Mikrowellenplatte enthalten sind und das Beaufschlagen desselben Drucks und/oder Druckabfalls das Beaufschlagen eines Drucks auf mindestens einen Abschnitt der ANSI-Mikrowellenplatte umfasst.

3. Verfahren nach einem der Ansprüche 1-2, weiter umfassend das Beaufschlagen mit Druck der gemeinsamen Quelle von Trägerfluid, um das Trägerfluid von der gemeinsamen Quelle von Trägerfluid in die Mikrofluidvorrichtung zu bewegen, wobei der auf die verschiedenen Quellen von Tröpfchenfluid beaufschlagte Druck und der auf die gemeinsame Quelle von Trägerfluid beaufschlagte Druck vorzugsweise dieselben sind, weiter vorzugsweise das Verändern des Drucks umfassend, der auf den einen oder beide von dem Druck beaufschlagt wird, der auf die verschiedenen Quellen von Tröpfchenfluid beaufschlagt wird und den Druck, der auf die gemeinsame Quelle von Trägerfluid beaufschlagt wird, basierend auf der Vielzahl von Tröpfchen des Satzes, der innerhalb der Mikrofluidvorrichtung produziert wird, vorzugsweise umfassend das Feststellen an mindestens einiger der Vielzahl von Tröpfchen des Satzes, der innerhalb der Mikrofluidvorrichtung produziert wird, und Verändern des Drucks, der auf einen oder beide von dem Druck beaufschlagt wird, der auf die verschiedenen Quellen von Tröpfchenfluid beaufschlagt wird und dem Druck, der auf die gemeinsame Quelle von Trägerfluid beaufschlagt, basierend auf der Feststellung, und/oder umfassend das Feststellen einer Zusammensetzung von mindestens einiger der Vielzahl von Tröpfchen des Satzes, der innerhalb der Mikrofluidvorrichtung produziert wird, und Verändern des Drucks, der auf einen oder beide von dem Druck beaufschlagt wird, der auf die verschiedenen Quellen von Tröpfchenfluid beaufschlagt wird und dem Druck, der auf die gemeinsame Quelle von Trägerfluid beaufschlagt wird, basierend auf der Feststellung.

4. Verfahren nach einem der Ansprüche 1-3, wobei:
(a) der Druck, der auf alle der verschiedenen Quellen von Tröpfchenfluid beaufschlagt wird, höher als ein atmosphärischer Druck ist oder geringer als ein atmosphärischer Druck ist; und/oder
(b) das Trägerfluid und jedes der Tröpfchenfluide unvermischbar sind; und/oder
(c) die Vielzahl der Tröpfchen des Satzes monodispers ist; und/oder eine allgemeine durchschnittliche Dimension von weniger als 1 mm aufweist.

5. Verfahren nach einem der Ansprüche 1-4, umfassend das Produzieren von mindestens 100 Tröpfchen pro Sekunde, vorzugsweise mindestens 10³ Tröpfchen pro Sekunde, vorzugsweise mindestens 10⁴ Tröpfchen pro Sekunde und/oder umfassend das Produzieren von mindestens 1 ml Tröpfchen pro Sekunde, vorzugsweise mindestens 10 ml Tröpfchen pro Sekunde.

6. Gegenstand, umfassend:
eine Mikrofluidvorrichtung (58, 100), umfassend eine Vielzahl von Einheiten zur Herstellung von Tröpfchen (51, 52, 53, 54, 55, 100, 191, 192, 193), wobei jede der Einheiten zur Herstellung von Tröpfchen in Fluidkommunikation mit einer unterschiedlichen Quelle eines Tröpfchenfluids (21, 22, 23, 24, 25, 105) und einer gemeinsamen Quelle von Trägerfluid (64) steht, wobei jede der Einheiten zur Herstellung von Tröpfchen einen Auslasskanal (138, 172, 173, 174, 175) umfasst, der an einem Schnittpunt (130) austritt, wobei jeder der Auslasskanäle in Fluidkommunikation mit einem gemeinsamen Sammelkanal (77, 171) steht;
wobei mindestens eine der Einheiten zur Herstellung von Tröpfchen Folgendes umfasst:
einen Einlass (108) zum Empfangen von Tröpfchenfluid (31, 32, 33, 34, 35, 105) von einer der verschiedenen Quellen von Tröpfchenfluid, wobei der Einlass in Fluidkommunikation über einen ersten Mikrofluidkanal (102) mit dem Schnittpunkt von Mikrofluidkanälen steht; und
einen zweiten Mikrofluidkanal (66, 119, 111, 161), der sich von dem Schnittpunkt erstreckt, wobei der zweite Mikrofluidkanal in Fluidkommunikation mit der gemeinsamen Quelle von Trägerfluid steht;
wobei mindestens einer der ersten oder der zweiten Mikrofluidkanäle eine Länge innerhalb der Einheit zur Herstellung von Tröpfchen aufweist, die länger als das Zweifache der größten Dimension der Einheit zur Herstellung von Tröpfchen ist, wobei die größte Dimension der Einheit zur Herstellung von Tröpfchen die längste gerade Linie ist, die vollständig innerhalb der Einheit zur Herstellung von Tröpfchen enthalten sein kann.

7. Gegenstand nach Anspruch 6, weiter umfassend einen dritten Mikrofluidkanal (112), der sich von dem Schnittpunkt erstreckt, wobei vorzugsweise:
(a) der dritte Mikrofluidkanal in Fluidkommunikation mit der gemeinsamen Quelle von Trägerfluid steht; und/oder
(b) sich der zweite Mikrofluidkanal (111) und der dritte Mikrofluidkanal an dem Schnittpunkt (130) in einem Winkel von 180° schneiden, und/oder
(c) der zweite Mikrofluidkanal und der dritte Mikrofluidkanal jeweils in Fluidkommunikation mit der gemeinsamen Quelle von Trägerfluid über einen unterschiedlichen Einlass zu der Einheit zur Herstellung von Tröpfchen stehen; und/oder
(d) der zweite Mikrofluidkanal und der dritte Mikrofluidkanal jeweils in Fluidkommunikation mit der gemeinsamen Quelle von Trägerfluid über einen gemeinsamen Einlass zu der Einheit zur Herstellung von Tröpfchen stehen.

8. Gegenstand nach einem der Ansprüche 6-7, wobei jeder des ersten und des zweiten Mikrofluidkanals eine Länge innerhalb der Einheit zur Herstellung von Tröpfchen aufweist, der größer als das Doppelte der größten Dimension der Einheit zur Herstellung von Tröpfchen ist, vorzugsweise größer als das Dreifache der größten Dimension der Einheit zur Herstellung von Tröpfchen ist.

9. Gegenstand nach einem der Ansprüche 6-7, weiter umfassend:
(a) einen Einlassfilter (145), der in Fluidkommunikation mit einem zentral positionierten Einlass steht, wobei der Einlassfilter vorzugsweise zwischen dem Einlass (108) und dem ersten Mikrofluidkanal (102) positioniert ist; und/oder
(b) einen Trägerfilter (141), der zwischen einem Einlass (118) für Trägerfluid (62, 115) zu der Einheit zur Herstellung von Tröpfchen und dem zweiten Mikrofluidkanal (111) positioniert ist.

10. Gegenstand nach einem der Ansprüche 6-7, wobei:
(a) sich der erste Mikrofluidkanal und der zweite Mikrofluidkanal an dem Schnittpunkt in einem Winkel von 90 ° schneiden, und/oder wobei der Schnittpunkt weiter einen Auslasskanal umfasst; und/oder
(b) der Auslasskanal in einem Winkel von 180° bezüglich des ersten Mikrofluidkanals positioniert ist und/oder wobei der erste Kanal, der zweite Kanal und der Auslasskanal eine T-Verzweigungsstelle definieren und/oder wobei der erste Kanal, der zweite Kanal und der Auslasskanal eine Y-Verzweigungsstelle definieren und/oder wobei der erste Mikrofluidkanal und der zweite Mikrofluidkanal ebenflächig zueinander sind; und/oder
(c) der Einlass innerhalb der Einheit zur Herstellung von Tröpfchen zentral positioniert ist und/oder den Mittelpunkt der Einheit zur Herstellung von Tröpfchen umfasst und/oder kreisförmig ist und/oder einen kreisförmigen Filter umfasst und/oder sich mit einer Rohrleitung schneidet, die sich von der Einheit zur Herstellung von Tröpfchen aus nach außen erstreckt.

11. Gegenstand nach einem der Ansprüche 6-7, wobei die Einheiten zur Herstellung von Tröpfchen in einem wiederholten Abstand von 9 mm, 4,5 mm oder 2,25 mm positioniert sind.

12. Gegenstand nach einem der Ansprüche 6-7, wobei mindestens einige der verschiedenen Quellen von Tröpfchenfluid innerhalb einer ANSI-Mikrowellenplatte enthalten sind, wobei vorzugsweise:
(a) die Mikrofluidvorrichtung in Fluidkommunikation mit mindestens 1/4 der Vertiefungen innerhalb der ANSI-Mikrowellenplatte steht; oder
(b) die verschiedenen Quellen von Tröpfchenfluid innerhalb einer ANSI-Mikrowellenplatte mit 96 Vertiefungen, einer ANSI-Mikrowellenplatte mit 384 Vertiefungen oder einer ANSI-Mikrowellenplatte mit 1.536 Vertiefungen enthalten sind; und/oder
wobei der wiederholte Abstand 9 mm, 4,5 mm oder 2,25 mm beträgt.

13. Gegenstand nach einem der Ansprüche 6-7, wobei:
(a) die Vielzahl von Einheiten zur Herstellung von Tröpfchen identisch ist, wobei die Einheiten zur Herstellung von Tröpfchen vorzugsweise, ungeachtet der Rotationen, Reflexionen und Translationen identisch sind; und/oder
(b) die Mikrofluidvorrichtung mindestens 24 Einheiten zur Herstellung von Tröpfchen umfasst, und/oder
(c) die Mikrofluidvorrichtung ein Polymer umfasst, wobei die Mikrofluidvorrichtung vorzugsweise Poly (Dimethylsiloxan) umfasst; und/oder
(d) die Mikrofluidvorrichtung weiter eine Vielzahl von Rohrleitungen (41, 42, 43, 44, 45) umfasst, die sich nach außen von jeder der Einheiten zur Herstellung von Tröpfchen aus erstrecken, wobei jede der Rohrleitungen vorzugsweise eine der verschiedenen Quellen von Tröpfchenfluid mit einer der Einheiten zur Herstellung von Tröpfchen fluidisch verbindet, und/oder
(e) die Mikrofluidvorrichtung eine Vielzahl von darin beinhalteten parallelen Kanälen (162, 163, 164, 165, 211, 212, 213) zum Verteilen von Trägerfluid von der gemeinsamen Quelle von Trägerfluid an jede der Einheiten zur Herstellung von Tröpfchen umfasst, wobei vorzugsweise mindestens einige der Vielzahl von parallelen Kanälen (172, 173, 174, 175, 221, 222, 223) Mikrofluidkanäle sind und/oder wobei die Mikrofluidvorrichtung eine Vielzahl von darin enthaltenen parallelen Kanälen zum Sammeln von Tröpfchen umfasst, die von jeder der Einheiten zur Herstellung von Tröpfchen produziert werden, wobei vorzugsweise mindestens einige der Vielzahl von parallelen Kanälen Mikrofluidkanäle sind.

14. Gegenstand nach einem der Ansprüche 6-7, wobei jede der Einheiten zur Herstellung von Tröpfchen Folgendes umfasst:
einen Einlass (108) zum Empfangen von Tröpfchenfluid von einer der verschiedenen Quellen von Tröpfchenfluid, wobei der Einlass in Fluidkommunikation über einen ersten Mikrofluidkanal (102) mit dem Schnittpunkt (130) von Mikrofluidkanälen steht; und
einen zweiten Mikrofluidkanal (66, 119, 111, 161), der sich von dem Schnittpunkt erstreckt, wobei der zweite Mikrofluidkanal in Fluidkommunikation mit der gemeinsamen Quelle von Trägerfluid steht, wobei vorzugsweise:
(a) der Einlass innerhalb der Einheit zur Herstellung von Tröpfchen zentral positioniert ist; und/oder
(b) mindestens einer des ersten oder des zweiten Mikrofluidkanals eine erste Sektion und eine zweite Sektion vorweist, die antiparallel zu der ersten Sektion verläuft; und/oder
(c) weiter einen dritten Mikrofluidkanal (112) umfassend, der sich von dem Schnittpunkt erstreckt, wobei der dritte Mikrofluidkanal in Fluidkommunikation mit der gemeinsamen Quelle von Trägerfluid steht.

15. Gegenstand nach einem der Ansprüche 6-7, wobei jede der Einheiten zur Herstellung von Tröpfchen eine dimensionale Einschränkung innerhalb eines Mikrofluidkanals umfasst und/oder wobei jede der verschiedenen Quellen von Tröpfchenfluid gemeinsam mindestens eine Komponente aufweist, wobei die gemeinsame Komponente vorzugsweise ein Lösungsmittel ist und/oder wobei jede der verschiedenen Quellen von Tröpfchenfluid dasselbe Lösungsmittel und eine in dem Lösungsmittel enthaltene unterschiedliche Spezies enthält.

## Revendications

1. Procédé comprenant :
la fourniture d'un dispositif microfluidique (58, 100) dans une chambre sous pression comprenant une pluralité d'unités de production de gouttelettes (51, 52, 53, 54, 55, 100, 191, 192, 193), chacune des unités de production de gouttelettes étant en communication fluidique avec une source différente de fluide de gouttelettes (21, 22, 23, 24, 25, 105) et une source commune de fluide véhiculaire (64), chacune des unités de production de gouttelettes comprenant un canal de sortie (138, 172, 173, 174, 175) quittant une intersection (130), chacun des canaux de sortie étant en communication fluidique avec un canal collecteur commun (77, 171),
l'application de la même pression et/ou de la même chute de pression via la chambre sous pression à la totalité des différentes sources de fluide de gouttelettes pour amener le fluide de gouttelettes (31, 32, 33, 34, 35, 105) à se déplacer depuis les différentes sources de fluide de gouttelettes jusque dans le canal collecteur commun ; et
la production, dans le dispositif microfluidique, d'un ensemble comprenant une pluralité de gouttelettes (71, 72, 73, 74, 75, 105), chaque gouttelette de l'ensemble comprenant un fluide de gouttelettes venant de seulement l'une des différentes sources de fluide de gouttelettes, la pluralité de gouttelettes de l'ensemble étant contenue dans le fluide véhiculaire (62, 115) venant de la source commune de fluide véhiculaire,
dans lequel au moins l'une des unités de production de gouttelettes comprend :
une entrée (108) pour recevoir un fluide de gouttelettes depuis l'une des différentes sources de fluide de gouttelettes, l'entrée étant en communication fluidique via un premier canal microfluidique (102) avec l'intersection de canaux microfluidiques ; et
un deuxième canal microfluidique (66, 119, 111, 161) s'étendant depuis l'intersection, le deuxième canal microfluidique étant en communication fluidique avec la source commune de fluide véhiculaire ;
dans lequel au moins l'un des premier ou deuxième canaux microfluidiques a une longueur dans l'unité de production de gouttelettes qui est supérieure à deux fois la dimension la plus grande de l'unité de production de gouttelettes, la dimension la plus grande de l'unité de production de gouttelettes étant la ligne droite la plus longue qui peut être complètement contenue dans l'unité de production de gouttelettes.

2. Procédé selon la revendication 1, dans lequel au moins certaines des différentes sources de fluide de gouttelettes sont contenues dans une plaque à micropuits ANSI et l'application de la même pression et/ou de la même chute de pression comprend l'application d'une pression à au moins une partie de la plaque à micropuits ANSI.

3. Procédé selon l'une quelconque des revendications 1 à 2, comprenant en outre l'application d'une pression à la source commune de fluide véhiculaire pour déplacer le fluide véhiculaire depuis la source commune de fluide véhiculaire jusque dans le dispositif microfluidique, de préférence dans lequel la pression appliquée aux différentes sources de fluide de gouttelettes et la pression appliquée à la source commune de fluide véhiculaire sont les mêmes, comprenant en outre de préférence la modification de la pression appliquée à l'une et/ou l'autre de la pression appliquée aux différentes sources de fluide de gouttelettes et de la pression appliquée à la source commune de fluide véhiculaire sur la base de la pluralité de gouttelettes de l'ensemble produit dans le dispositif microfluidique, comprenant de préférence la détermination d'au moins certaines de la pluralité de gouttelettes de l'ensemble produit dans le dispositif microfluidique et la modification de la pression appliquée à l'une et/ou l'autre de la pression appliquée aux différentes sources de fluide de gouttelettes et de la pression appliquée à la source commune de fluide véhiculaire sur la base de la détermination, et/ou comprenant la détermination d'une composition d'au moins certaines de la pluralité de gouttelettes de l'ensemble produit dans le dispositif microfluidique, et la modification de la pression appliquée à l'une et/ou l'autre de la pression appliquée aux différentes sources de fluide de gouttelettes et de la pression appliquée à la source commune de fluide véhiculaire sur la base de la détermination.

4. Procédé selon l'une quelconque des revendications 1 à 3, dans lequel :
(a) la pression appliquée à la totalité des différentes sources de fluide de gouttelettes est supérieure à la pression atmosphérique, ou est inférieure à la pression atmosphérique ; et/ou
(b) le fluide véhiculaire et chacun des fluides en gouttelettes sont immiscibles ; et/ou
(c) la pluralité de gouttelettes de l'ensemble est monodispersée ; et/ou a une dimension moyenne globale de moins de 1 mm.

5. Procédé selon l'une quelconque des revendications 1 à 4, comprenant la production d'au moins 100 gouttelettes par seconde, de préférence au moins 10³ gouttelettes par seconde, de préférence au moins 10⁴ gouttelettes par seconde, et/ou comprenant la production d'au moins 1 ml de gouttelettes par seconde, de préférence au moins 10 ml de gouttelettes par seconde.

6. Article comprenant :
un dispositif microfluidique (58, 100) comprenant une pluralité d'unités de production de gouttelettes (51, 52, 53, 54, 55, 100, 191, 192, 193), chacune des unités de production de gouttelettes étant en communication fluidique avec une source différente de fluide de gouttelettes (21, 22, 23, 24, 25, 105) et une source commune de fluide véhiculaire (64), chacune des unités de production de gouttelettes comprenant un canal de sortie (138, 172, 173, 174, 175) quittant une intersection (130), chacun des canaux de sortie étant en communication fluidique avec un canal collecteur commun (77, 171) ;
dans lequel au moins l'une des unités de production de gouttelettes comprend :
une entrée (108) pour recevoir un fluide de gouttelettes (31, 32, 33, 34, 35, 105) de l'une des différentes sources de fluide de gouttelettes, l'entrée étant en communication fluidique via un premier canal microfluidique (102) avec l'intersection de canaux microfluidiques ; et
un deuxième canal microfluidique (66, 119, 111, 161) s'étendant depuis l'intersection, le deuxième canal microfluidique étant en communication fluidique avec la source commune de fluide véhiculaire ;
dans lequel au moins l'un des premier ou deuxième canaux microfluidiques a une longueur dans l'unité de production de gouttelettes qui est supérieure à deux fois la dimension la plus grande de l'unité de production de gouttelettes, la dimension la plus grande de l'unité de production de gouttelettes étant la ligne droite la plus longue qui peut être complètement contenue dans l'unité de production de gouttelettes.

7. Article selon la revendication 6, comprenant en outre un troisième canal microfluidique (112) s'étendant depuis l'intersection, de préférence dans lequel :
(a) le troisième canal microfluidique est en communication fluidique avec la source commune de fluide véhiculaire ; et/ou
(b) à l'intersection (130), le deuxième canal microfluidique (111) et le troisième canal microfluidique se coupent selon un angle de 180° ; et/ou
(c) le deuxième canal microfluidique et le troisième canal microfluidique sont chacun en communication fluidique avec la source commune de fluide véhiculaire via une entrée différente dans l'unité de production de gouttelettes ; et/ou
(d) le deuxième canal microfluidique et le troisième canal microfluidique sont chacun en communication fluidique avec la source commune de fluide véhiculaire via une entrée commune dans l'unité de production de gouttelettes.

8. Article selon l'une quelconque des revendications 6 et7, dans lequel chacun des premier et deuxième canaux microfluidiques a une longueur dans l'unité de production de gouttelettes qui est supérieure à deux fois la dimension la plus grande de l'unité de production de gouttelettes, de préférence supérieure à trois fois la dimension la plus grande de l'unité de production de gouttelettes.

9. Article selon l'une quelconque des revendications 6 et7, comprenant en outre :
(a) un filtre d'entrée (145) en communication fluidique avec une entrée en position centrale, de préférence dans lequel le filtre d'entrée est positionné entre l'entrée (108) et le premier canal microfluidique (102) ; et/ou
(b) un filtre véhiculaire (141) positionné entre une entrée (118) pour le fluide véhiculaire (62, 115) dans l'unité de production de gouttelettes et le deuxième canal microfluidique (111).

10. Article selon l'une quelconque des revendications 6 et7, dans lequel :
(a) à l'intersection, le premier canal microfluidique et le deuxième canal microfluidique se coupent selon un angle de 90° et/ou dans lequel l'intersection comprend en outre un canal de sortie ; et/ou
(b) le canal de sortie est positionné selon un angle de 180° par rapport au premier canal microfluidique et/ou dans lequel le premier canal, le deuxième canal et le canal de sortie définissent une jonction en T et/ou dans lequel le premier canal, le deuxième canal et le canal de sortie définissent une jonction en Y, et/ou dans lequel le premier canal microfluidique et le deuxième canal microfluidique sont mutuellement planaires ; et/ou
(c) l'entrée est positionnée de manière centrale dans l'unité de production de gouttelettes et/ou comprend le centroïde de l'unité de production de gouttelettes, et/ou est circulaire, et/ou comprend un filtre circulaire, et/ou coupe un tube s'étendant vers l'extérieur depuis l'unité de production de gouttelettes.

11. Article selon l'une quelconque des revendications 6 et 7, dans lequel les unités de production de gouttelettes sont positionnées selon un espacement répétitif de 9 mm, de 4,5 mm ou de 2,25 mm.

12. Article selon l'une quelconque des revendications 6 et 7, dans lequel au moins certaines des différentes sources de fluide de gouttelettes sont contenues dans une plaque à micropuits ANSI, de préférence dans lequel :
(a) le dispositif microfluidique est en communication fluidique avec au moins 1/4 des puits dans la plaque à micropuits ANSI ; ou
(b) les différentes sources de fluide de gouttelettes sont contenues dans une plaque à micropuits ANSI de 96 puits, une plaque à micropuits ANSI de 384 puits ou une plaque à micropuits ANSI de 1536 puits ; et/ou
dans lequel l'espacement répétitif est de 9 mm, de 4,5 mm ou de 2,25 mm.

13. Article selon l'une quelconque des revendications 6 et 7, dans lequel :
(a) la pluralité d'unités de production de gouttelettes est identique, de préférence dans lequel les unités de production de gouttelettes sont identiques en mettant de côté les rotations, les réflexions et les translations ; et/ou
(b) le dispositif microfluidique comprend au moins 24 unités de production de gouttelettes, et/ou
(c) le dispositif microfluidique comprend un polymère, de préférence dans lequel le dispositif microfluidique comprend du poly(diméthylsiloxane) ; et/ou
(d) le dispositif microfluidique comprend en outre une pluralité de tubes (41, 42, 43, 44, 45) s'étendant vers l'extérieur depuis chacune des unités de production de gouttelettes, de préférence dans lequel chacun des tubes raccorde en mode fluidique l'une des différentes sources de fluide de gouttelettes à l'une des unités de production de gouttelettes, et/ou
(e) le dispositif microfluidique comprend une pluralité de canaux parallèles (162, 163, 164, 165, 211, 212, 213) en son sein pour distribuer du fluide véhiculaire depuis la source commune de fluide véhiculaire à chacune des unités de production de gouttelettes, de préférence dans lequel au moins certains de la pluralité de canaux parallèles (172, 173, 174, 175, 221, 222, 223) sont des canaux microfluidiques, et/ou dans lequel le dispositif microfluidique comprend une pluralité de canaux parallèles en son sein pour recueillir des gouttelettes produites par chacune des unités de production de gouttelettes, de préférence dans lequel au moins certains de la pluralité de canaux parallèles sont des canaux microfluidiques.

14. Article selon l'une quelconque des revendications 6 et7, dans lequel chacune des unités de production de gouttelettes comprend :
une entrée (108) pour recevoir un fluide de gouttelettes depuis étant en communication fluidique via un premier canal microfluidique (102) avec une intersection (130) de canaux microfluidiques ; et
un deuxième canal microfluidique (66, 119, 111, 161) s'étendant depuis l'intersection, le deuxième canal microfluidique étant en communication fluidique avec la source commune de fluide véhiculaire, de préférence :
(a) dans lequel l'entrée est en position centrale dans l'unité de production de gouttelettes ; et/ou
(b) dans lequel au moins l'un des premier ou deuxième canaux microfluidiques présente une première section et une deuxième section qui est antiparallèle à la première section ; et/ou
(c) comprenant en outre un troisième canal microfluidique (112) s'étendant depuis l'intersection, le troisième canal microfluidique étant en communication fluidique avec la source commune de fluide véhiculaire.

15. Article selon l'une quelconque des revendications 6 et7, dans lequel chacune des unités de production de gouttelettes comprend une restriction dimensionnelle dans un canal microfluidique, et/ou dans lequel chacune des différentes sources de fluide de gouttelettes a au moins un composant en commun, de préférence dans lequel le composant commun est un solvant, et/ou dans lequel chacune des différentes sources de fluide de gouttelettes contient le même solvant et une espèce différente contenue dans le solvant.
